# EUROPEAN PATENT APPLICATION

(11) **EP 4 550 165 A1**
(43) Date of publication of application: **07.05.2025**
(21) Application number: 23830457.0
(22) Date of filing: 29.06.2023
(51) Int. Cl.: G06F 16/21, G06F 16/9537, G06F 16/9035, G06F 16/906, G06F 16/23

(54) **METHOD AND APPARATUS FOR DIGITAL TWINNING OF OBJECT PLAN STATE, METHOD AND APPARATUS FOR SUBSCRIPTION OF OBJECT PLAN STATE, AND DEVICE**

(30) Priority: 30.06.2022 CN 202210767591; 30.06.2022 CN 202210767331
(71) Applicant: Beijing Wellintech Co., Ltd., Beijing 100086 (CN)
(72) Inventor: LIN, Wei, Beijing 100086 (CN)
(74) Representative: Cabinet Nony
(86) International application number: PCT/CN2023/104170
(87) International publication number: WO 2024/002293

(57) **Abstract**

The present application provides a method and apparatus for digital twinning of an object plan state, a method and apparatus for subscription of an object plan state, and a device. The twinning method comprises: constructing a target plan object model of a target plan object and a sub-plan object model of at least one sub-object that constitutes the target plan object, wherein the object is a physical object or an event; setting time attributes of the target plan object model and the at least one sub-plan object model as future times; and establishing an association relationship between the target plan object model and the at least one sub-plan object model. The method can implement the twining of everything, without constructing different data structure models for different objects, and can perform digital twinning on states of the object in different time periods in the future.

## Description

### Cross-Reference to Related Applications

This application claims priorities to Chinese Patent Application No. 202210767591.X, filed on June 30, 2022, and entitled "Method, Apparatus and Device for Digital Twinning of planned State of Entity", and Chinese Patent Application No. 202210767331.2, filed on June 30, 2022, and entitled "Method, Apparatus and Device for Digital Twinning of planned State of Event", the contents of which are hereby incorporated by reference in their entireties.

### Technical Field

The present application relates to the field of information technology, and in particular to methods, apparatuses, and devices for digital twinning and subscription of a planned state of an object.

### Background

The current entity object twinning process is complex and requires construction of models with different data structures. The models have many types and are not unified, so the models cannot be applied to twinning of all things. Moreover, the current entity twinning process does not perform digital twinning for a state of an entity in different time periods in the future.

At the same time, although there are many existing twinning methods for entity objects, there are fewer twinning methods for event objects, and most of the existing twinning methods for event objects are based on specific scenarios. At the same time, when performing digital twinning, the twinning methods are not unified and cannot be applied to twinning of all things.

### Summary

The present disclosure provides methods, apparatuses, and devices for digital twinning and subscription of a planned state of an object, to solve the problem that the current entity twinning process does not perform digital twinning for the state of the entity in different time periods in the future, and the problem that most of the existing twinning methods for event objects are based on specific scenarios and are not unified and cannot be applied to twinning of all things.

In a first aspect, the present application provides a method for digital twinning of a planned state of an object, the method including:
constructing a target planned object model of a target planned object and a sub-planned object model of at least one sub-object constituting the target planned object, where each of the target planned object model and the at least one sub-planned object model includes a time attribute;
setting the time attribute of each of the target planned object model and the at least one sub-planned object model to be a future time; and
establishing an association relationship between the target planned object model and the at least one sub-planned object model.

Optionally, the target planned object is a target planned entity, and the sub-object is a sub-entity; or,
the target planned object is a target planned event, and the sub-object is a sub-target planned event.

Optionally, the future time is at least one moment in the future or at least one duration in the future.

Optionally, the establishing the association relationship between the target planned object model and the at least one sub-planned object model includes:
establishing a parent-child relationship between the target planned object model and the at least one sub-planned object model by identifying the target planned object model as a model of a parent planned object and identifying the sub-planned object model as a model of a child planned object belonging to the parent planned object.

Optionally, the identifying the sub-planned object model as the model of the child planned object belonging to the parent planned object includes:
identifying the sub-planned object model as the model of the child planned object belonging to a unique parent planned object.

Optionally, in response to determining that the target planned object is a target planned entity, each of the target planned object model and the at least one sub-planned object model further includes a first spatial attribute, and a value of the first spatial attribute of the at least one sub-planned object model is within a range of a value of the first spatial attribute of the target planned object model;
the first spatial attribute includes at least one of a spatial range, a spatial position, or a shape.

Optionally, the method further includes:
establishing spatial coordinate systems for the target planned object model and the at least one sub-planned object model respectively;
the spatial range is used for describing a spatial range where the target planned object and the at least one sub-object are located;
the spatial position is represented by an identifier of another planned object where the sub-object is spatially located within the spatial range of the target planned object or a coordinate value of the sub-object in the spatial coordinate system of the target planned object model;
the shape of the target planned object model is represented by coordinates in a spatial coordinate system where the target planned object is located, and the shape of the sub-planned object model is represented by relative coordinates relative to a spatial coordinate system of the target planned entity.

Optionally, the method further includes:
in response to determining that the target planned object is a target planned entity, generating a parent record of the target planned object model and a child record of the at least one sub-planned object model in at least one duration in the future through the target planned object model and the at least one sub-planned object model, where the parent record and the child record are respectively used for describing attribute states of the target planned object and the at least one sub-object in the at least one duration in the future;
where a time range of the at least one child record is within a time range of the parent record.

Optionally, the method further includes:
establishing an association relationship between the parent record and the at least one child record, where the at least one child record has a unique parent record.

Optionally, each of the parent record and the at least one child record includes a record identifier for uniquely identifying the parent record or the at least one child record.

Optionally, each of the parent record and the at least one child record includes a second spatial attribute, and the second spatial attribute includes at least one of a spatial range, a spatial size, a spatial shape or a spatial position.

Optionally, based on that the second spatial attribute is the spatial range, the parent record and the at least one child record are used for describing change information of the spatial range of the target planned object and change information of the spatial range of the at least one sub-object in the at least one duration in the future;
where in the at least one duration in the future, the spatial range of the at least one child record is included within the spatial range of the parent record.

Optionally, based on that the second spatial attribute is the spatial size, the parent record and the at least one child record are used for describing change information of the spatial size of the target planned object and change information of the spatial size of the at least one sub-object in the at least one duration in the future;
where in the at least one duration in the future, the spatial size of the at least one child record is smaller than the spatial size of the parent record.

Optionally, based on that the second spatial attribute is the spatial position, the parent record and the at least one child record are used for describing change information of spatial position movement of the target planned object and change information of spatial position movement of the at least one sub-object in the at least one duration in the future;
where in the at least one duration in the future, the spatial position of the at least one child record is included within the spatial position of the parent record.

Optionally, based on that the second spatial attribute is the shape, the parent record and the at least one child record are used for describing shape change information of the target planned object and shape change information of the at least one sub-object in the at least one duration in the future;
where in the at least one duration in the future, the shape of the at least one child record is included within the shape of the parent record.

Optionally, the method further includes:
based on that the spatial position of the same sub-object changes from one other planned object to which the sub-object belongs to another other planned object at different future times, modifying the spatial position of the sub-planned object model corresponding to the sub-object at the future time after the spatial position changes.

Optionally, based on that the target planned object model of the at least one sub-planned object model meets a deletion condition at different times in the future, the method further includes:
releasing a parent-child relationship between the at least one sub-planned object model and the target planned object model at a future time after meeting the deletion condition;
where the meeting the deletion condition includes: a range of the spatial position of the sub-planned object model changes to outside a range of the spatial position of the target planned object model.

Optionally, after releasing the parent-child relationship between the at least one sub-planned object model and the target planned object model at the future time after meeting the deletion condition, the method further includes:
modifying the first spatial attribute of the at least one sub-planned object model to a physical space description where the sub-object corresponding to the at least one sub-planned object model is located.

Optionally, in response to determining that the target planned object is a target planned event, a start time of the parent planned object is earlier than or equal to a start time of the child planned object, and an end time of the parent planned object is later than or equal to an end time of the child planned object.

Optionally, in response to determining that the target planned object is a target planned event, each of the target planned object model and the sub-planned object model includes a parent object, and the establishing the parent-child relationship between the target planned object model and the sub-planned object model includes:
establishing the parent-child relationship between the target planned object model and the sub-planned object model by determining the parent object of the sub-planned object model as an object identifier of the target planned object model.

Optionally, in response to determining that the target planned object is a target planned event, based on that the target planned object model of the sub-planned object model meets a deletion condition at different times in the future, the method further includes:
releasing the parent-child relationship between the sub-planned object model and the target planned object model at a future time after meeting the deletion condition;
where the meeting the deletion condition includes: an end time of the child planned object is later than an end time of the parent planned object, or a duration of the child planned object is longer than a duration of the parent planned object.

Optionally, each of the target planned object model and the sub-planned object model further includes a spatial attribute;
the spatial attribute includes at least one of a spatial range or a spatial position.

Optionally, the spatial range is used for describing a spatial range where the target planned object and the sub-object occur;
the spatial position is used for describing that the spatial position of the sub-planned object model is within a range of the spatial position of the target planned object model or the spatial range of the sub-planned object model is within the spatial range of the target planned object model.

Optionally, the method further includes:
generating a corresponding first record using attribute parameters of the target planned object at different times in the future based on the target planned object model corresponding to the times;
generating a corresponding second record using attribute parameters of the sub-object at different times in the future based on the sub-planned object model corresponding to the times;
where the attribute parameters include at least one of an attribute name, a data type, a first spatial attribute, or a member attribute.

Optionally, each of a record of the target planned object model and a record of the sub-planned object model includes a record identifier for uniquely identifying the record of the target planned object model or the record of the sub-planned object model.

Optionally, the method further includes:
establishing a tree storage structure using the first record as a root storage node and using the second record as a child storage node of the root storage node;
determining a start time of a time attribute of the root storage node as a preset reference time, and determining a start time of a time attribute of the child storage node as a relative offset time of the preset reference time.

In a second aspect, the present application provides a subscribing method for a future state of an object, the method including:
constructing a target planned object model of a target planned object and a sub-planned object model of at least one sub-object constituting the target planned object, where each of the target planned object model and the at least one sub-planned object model includes a time attribute;
setting the time attribute of each of the target planned object model and the at least one sub-planned object model to be a future time;
establishing an association relationship between the target planned object model and the at least one sub-planned object model; and
generating a subscription item according to a subscription request for a future state of the target planned object, generating subscription information matching the subscription item according to future states of the target planned object model and the at least one sub-planned object model associated with the target planned object model, and sending the subscription information to a subscriber.

Optionally, the target planned object is a target planned entity, and the sub-object is a sub-entity; or,
the target planned object is a target planned event, and the sub-object is a sub-target planned event.

Optionally, the target planned object model includes a parent object identifier for uniquely mapping the target planned object model of the target planned object;
the at least one sub-planned object model includes a child object identifier for uniquely mapping the sub-planned object model of the sub-object.

Optionally, the generating the subscription item according to the subscription request for the future state of the target planned object, and generating the subscription information matching the subscription item according to the future states of the target planned object model and the at least one sub-planned object model associated with the target planned object model, includes:
receiving a subscription request for a future state of a planned object, the subscription request including a parent object identifier and a child object identifier, and generating a subscription item according to the subscription request;
for a target planned object model, generating subscription information for querying a future state of each sub-planned object model associated with the target planned object model according to the parent object identifier of the target planned object model;
for a sub-planned object model, generating subscription information for querying a future state of the target planned object model associated with the sub-planned object model according to the child object identifier of the sub-planned object model.

Optionally, the generating the subscription item according to the subscription request for the future state of the target planned object, and generating the subscription information matching the subscription item according to the future states of the target planned object model and the at least one sub-planned object model associated with the target planned object model, includes:
receiving a subscription request for a future state of a planned object, the subscription request including a time range, and generating a subscription item including the time range;
generating subscription information for querying a future state of each sub-planned object model associated with the target planned object model within the time range according to the parent object identifier of the target planned object model.

Optionally, the method further includes:
in response to determining that the target planned object is the target planned entity, receiving a query request for a future state of the target planned object, where the query request includes a spatial range;
for a target planned object model, querying a future state of each sub-planned object model within a spatial range of the target planned object model according to the spatial range;
for a sub-planned object model, querying a target planned object model with a spatial range including a spatial range of the sub-planned object model and/or another sub-planned object model included in the spatial range of the target planned object model according to the spatial range of the sub-planned object model.

In a third aspect, the present application provides an apparatus for digital twinning of a planned state of an object, the apparatus including:
a planned object model constructing module, configured to construct a target planned object model of a target planned object and a sub-planned object model of at least one sub-object constituting the target planned object, where each of the target planned object model and the at least one sub-planned object model includes a time attribute;
a time setting module, configured to set the time attribute of each of the target planned object model and the at least one sub-planned object model to be a future time; and
a relationship establishment module, configured to establish an association relationship between the target planned object model and the at least one sub-planned object model.

In a fourth aspect, the present application provides an apparatus for digital twinning of a planned state of an object, the apparatus including:
a planned object model constructing module, configured to construct a target planned object model of a target planned object and a sub-planned object model of at least one sub-object constituting the target planned object, where each of the target planned object model and the at least one sub-planned object model includes a time attribute;
a time setting module, configured to set the time attribute of each of the target planned object model and the at least one sub-planned object model to be a future time;
a relationship establishment module, configured to establish an association relationship between the target planned object model and the at least one sub-planned object model; and
a subscription item information generation module, configured to generate a subscription item according to a subscription request for a future state of the target planned object, and generate subscription information matching the subscription item according to future states of the target planned object model and at least one sub-planned object model associated with the target planned object model.

In a fifth aspect, the present application provides a device for digital twinning of a planned state of an object, the device including:
at least one processor; and a memory communicatively connected to the at least one processor; where the memory stores instructions executable by the at least one processor, and the instructions are executed by the at least one processor to cause the at least one processor to perform the method in the first aspect.

In a sixth aspect, the present application provides an object subscription device, the device including:
at least one processor; and a memory communicatively connected to the at least one processor; where the memory stores instructions executable by the at least one processor, and the instructions are executed by the at least one processor to cause the at least one processor to perform the method in the second aspect.

In a seventh aspect, the present application provides a computer storage medium, where the computer storage medium stores a computer program, and the computer program is configured to enable a computer to perform the method in the first aspect, or to perform the method in the second aspect.

According to the methods, apparatuses, and devices for digital twinning and subscription of a planned state of an object in the present application, it is possible to solve the problem that the current entity twinning process does not perform digital twinning for the state of the entity in different time periods in the future, and the problem that most of the existing twinning methods for event objects are based on specific scenarios and are not unified and cannot be applied to twinning of all things.

### Brief Description of Figures

In order to more clearly illustrate technical solutions in embodiments of the present disclosure, drawings required for use in the description of embodiments will be briefly introduced below. Obviously, the drawings described below are only some embodiments of the present disclosure. For the ordinary skilled in the art, other drawings can be obtained based on these drawings without creative work.
FIG. 1 is a schematic diagram of a data structure of a method for digital twinning of an entity planned state according to an embodiment of the present disclosure;
FIG. 2 is a flow chart of a method for digital twinning of an entity planned state according to an embodiment of the present disclosure;
FIG. 3 is a schematic diagram of a planned entity model according to an embodiment of the present disclosure;
FIG. 4 is a schematic diagram of predefinition of a planned entity according to an embodiment of the present disclosure;
FIG. 5 is a schematic diagram of a planned entity according to an embodiment of the present disclosure;
FIG. 6 is a schematic diagram of data of a planned entity according to an embodiment of the present disclosure;
FIG. 7 is a schematic diagram of spatial positions of a parent record and at least one child record according to an embodiment of the present disclosure;
FIG. 8 is a schematic diagram of change of a spatial position of a child record according to an embodiment of the present disclosure;
FIG. 9 is a schematic diagram of a spatial position of a planned entity according to an embodiment of the present disclosure;
FIG. 10 is a schematic diagram of change of a spatial position of a sub-planned entity according to an embodiment of the present disclosure;
FIG. 11 is a schematic diagram of member information according to an embodiment of the present disclosure;
FIG. 12 is a schematic diagram of an example according to an embodiment of the present disclosure;
FIG. 13 is a schematic diagram of another example according to an embodiment of the present disclosure;
FIG. 14 is a flow chart of a subscribing method for a future state of an entity according to an embodiment of the present disclosure;
FIG. 15 is a schematic diagram of a data structure of a method for digital twinning of an event planned state according to an embodiment of the present disclosure;
FIG. 16 is a flow chart of a method for digital twinning of an event planned state according to an embodiment of the present disclosure;
FIG. 17 is a schematic diagram of a planned event model according to an embodiment of the present disclosure;
FIG. 18 is a schematic diagram of predefinition of a planned event according to an embodiment of the present disclosure;
FIG. 19 is a schematic diagram of a planned event according to an embodiment of the present disclosure;
FIG. 20 is a schematic diagram of data of a planned event according to an embodiment of the present disclosure;
FIG. 21 is a schematic diagram of an example of a method for digital twinning of an event planned state according to an embodiment of the present disclosure;
FIG. 22 is a schematic diagram of another method for digital twinning of an event planned state according to an embodiment of the present disclosure;
FIG. 23 is a schematic diagram of a time attribute of a planned event according to an embodiment of the present disclosure;
FIG. 24 is a flow chart of a subscribing method for a future state of an event according to an embodiment of the present disclosure;
FIG. 25 is a schematic diagram of an apparatus for digital twinning of an entity planned state according to an embodiment of the present disclosure;
FIG. 26 is an entity subscription apparatus according to an embodiment of the present disclosure;
FIG. 27 is a schematic diagram of an apparatus for digital twinning of an event planned state according to an embodiment of the present disclosure;
FIG. 28 is a schematic diagram of an event subscription apparatus according to an embodiment of the present disclosure;
FIG. 29 is a schematic diagram of a device for digital twinning of an entity planned state, an entity subscription device, a device for digital twinning of an event planned state and an event subscription device according to an embodiment of the present disclosure.

### Detailed Description

Technical solutions in embodiments of the present application will be described clearly and in detail below with reference to the accompanying drawings. Obviously, the described embodiments are only part of embodiments of the present disclosure, rather than all the embodiments. Based on embodiments of the present disclosure, all other embodiments obtained by the ordinary skilled in the art without any creative work shall fall within the scope of protection of the present disclosure. Obtaining, storing, using, and processing of data in embodiments of the present application comply with relevant provisions of national laws and regulations.

The present application proposes a method, apparatus, and device for digital twinning of a planned state of an object. The method for digital twinning of a planned state of an object includes two aspects. The first aspect is a method for digital twinning of an entity planned state, and the second aspect is a method for digital twinning of an event planned state.

In the first aspect, based on that an object is determined to be an entity, a target planned object is a target planned entity, and a sub-object is a sub-entity. In order to distinguish between the entity and the event, the following description uses the entity. For ease of description, the following entity object is described using the entity.

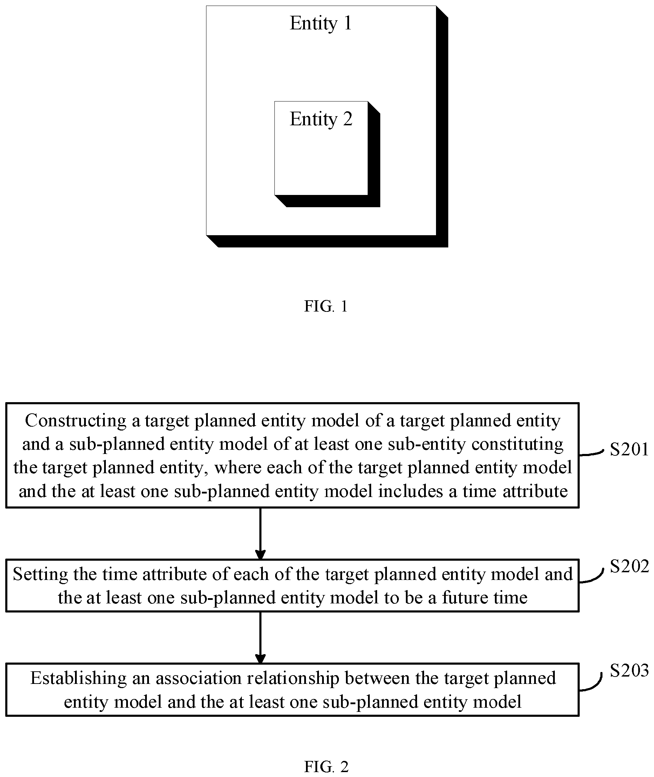

In the current time and future time of the objective world, an entity may be in different states. At the current time, there is only an entity 1. At some time in the future, as shown in FIG. 1, the entity 1 includes an entity 2. Under this state change, a unified data structure is used to represent the entity 1 and the entity 2. The entity 1 and the entity 2 are respectively marked with unique entity identifiers. The entity identifier is unique in the entire planned library system, and the name can be repeated.

In order to realize digital twinning of a state of an entity in different time periods in the future, the present application provides a method for digital twinning of a planned state of an entity, as shown in FIG. 2, the method includes following steps.

S201: Constructing a target planned entity model of a target planned entity and a sub-planned entity model of at least one sub-entity constituting the target planned entity, where each of the target planned entity model and the at least one sub-planned entity model includes a time attribute.

A structure of an entity model is a set of attribute parameters of an entity. The entity may include a historical state, a current state, and a planned state according to the time attribute. Digital twinning is performed based on the entity model and different states of the entity to obtain entities corresponding to different states. Embodiments of the present application involve a planned state of an entity. For a planned entity, digital twinning may be performed based on the entity model and the planned state of the entity to obtain the planned entity.

When creating a planned entity model, a structure of the planned entity model may be obtained by determining an attribute parameter set of the planned entity. Attribute parameters in the attribute parameter set of the planned entity include an attribute name and a data type. Furthermore, the structure of the planned entity model may be predefined at least once, that is, a parameter initialization operation may be performed to obtain at least one set of predefined data initial values corresponding to the structure of the planned entity model. The predefinition steps may be performed or not performed according to a user's requirements. In addition, planned entity data corresponding to different planned time periods may be determined according to state values of entities in different planned time periods.

S202: Setting the time attribute of each of the target planned entity model and the at least one sub-planned entity model to be a future time.

Attribute parameters of the target planned entity model and the at least one sub-planned entity model include a time attribute. Since digital twinning is performed for the planned state of the entity, the time attribute is a future time.

In a possible implementation, the future time is at least one moment in the future or at least one duration in the future.

S203: Establishing an association relationship between the target planned entity model and the at least one sub-planned entity model.

In a possible implementation, establishing the association relationship between the target planned entity model and the at least one sub-planned entity model includes:
establishing a parent-child relationship between the target planned entity model and the at least one sub-planned entity model by identifying the target planned entity model as a model of a parent planned entity and identifying the sub-planned entity model as a model of a child planned entity belonging to the parent planned entity.

There may be a plurality of association relationships between entities. An association relationship established in an embodiment of the present application is a parent-child relationship, that is, a relationship between a parent planned entity and a child planned entity. The target planned entity model and the sub-planned entity model include a plurality of attribute parameters, and the attribute parameters can be used for identifying whether the planned entity model is a model of a parent planned entity or a model of a child planned entity. After the identification is completed, the parent-child binding relationship between the target planned entity model and the sub-planned entity model is established.

In this embodiment, the parent planned entity to which the child planned entity belongs is unique, and the identifying the sub-planned entity model as the model of child planned entity belonging to the parent planned entity includes: identifying the sub-planned entity model as the model of the child planned entity belonging to a unique parent planned entity.

Through the method for digital twinning of a planned state of an entity according to the present application, common characteristics can be configured for certain entities to achieve twinning of all things, and the digital twinning of the planned state of the entity in different time periods in the future can be performed by setting time attributes.

In order to realize the digital twinning of the planned state of the entity in embodiments of the present application, several stages including constructing a planned entity model, predefining the planned entity model (optional), generating a planned entity, and generating a planned entity record are mainly included. The implementation of each stage is described below.

### 1) A planned entity model is constructed.

The planned entity model is a configuration of planned entities with common characteristics. Some basic attributes of the planned entities are defined in the planned entity model. This embodiment needs to construct a target planned entity model of a target planned entity and a sub-planned entity model of at least one sub-entity. The target planned entity may have at least one sub-entity which has a parent-child binding relationship with the target planned entity, and the sub-entity is bound to a unique target planned entity.

Attribute names in attribute parameter sets of the target planned entity model and the sub-planned entity model may be the same, but attribute parameter values may be different.

As an optional implementation, an attribute parameter of the planned entity model includes a spatial attribute.

In a possible implementation, each of the target planned entity model and the at least one sub-planned entity model further includes a first spatial attribute, and a value of the first spatial attribute of the at least one sub-planned entity model is within a range of a value of the spatial attribute of the target planned entity model, that is, the sub-entity belongs to the parent planned entity in space.

In this embodiment, the first spatial attribute includes at least one of a spatial range, a spatial position, or a shape.

When the first spatial attribute of the target planned entity model and the sub-planned entity model includes the spatial range, then the first spatial attribute can be used for determining whether the sub-entity is within the spatial range of the parent planned entity. When the first spatial attribute includes the spatial range and the spatial position, then the first spatial attribute can be used for determining whether the sub-entity is located at a certain spatial position within the spatial range of the parent planned entity. When the first spatial attribute includes the spatial range, the spatial position and the shape, then the first spatial attribute can be used for determining what shape the sub-entity is at a certain spatial position within the spatial range of the parent planned entity.

In this embodiment, when the target planned entity model and the at least one sub-planned entity model include spatial attributes, spatial coordinate systems for the parent planned entity model and the at least one sub-planned entity model are respectively established, and following types of spatial attributes can be defined as follows.

### 1.1) Spatial range is defined as follows.

The spatial range is used for describing a spatial range where the target planned entity and the at least one sub-entity are located, that is, the spatial range of the target planned entity can be determined through the spatial attribute of the target planned entity model, and the spatial range of the sub-entity can be determined through the spatial attribute of the sub-planned entity model.

### 1.2) Spatial position is defined as follows.

The spatial position of the sub-entity is represented by an identifier of another planned entity where the sub-entity is spatially located within the spatial range of the target planned entity or by a coordinate value of the sub-entity in the spatial coordinate system of the target planned entity model.

In this embodiment, the spatial attribute of the sub-planned entity model includes the spatial range and the spatial position, and the spatial range belongs to the spatial range of the parent planned entity. The spatial range of the parent planned entity includes a plurality of planned entities. When the sub-entity is located at a position of one of the planned entities, the identifier of the planned entity where the sub-entity is located can be used as the attribute value of the spatial position of the sub-entity. For example, when an entity is planned to be produced on a certain device in the workshop, the spatial position of the entity can be represented by an identifier of the device.

Alternatively, a coordinate system is established for the spatial range of the target planned entity model, and the spatial position of the sub-entity is represented by a coordinate position of the sub-entity in the corresponding coordinate system.

### 1.3) Shape is defined as follows.

The shape of the target planned entity model is represented by coordinates in a spatial coordinate system where the target planned entity is located, and the shape of the sub-planned entity model is represented by relative coordinates relative to a spatial coordinate system of the target planned entity. Shape information of the entity is abstractly extracted. When only envelope information is concerned, the envelope information can be set. When specific shape information is concerned, precise shape data in a local coordinate system can be set.

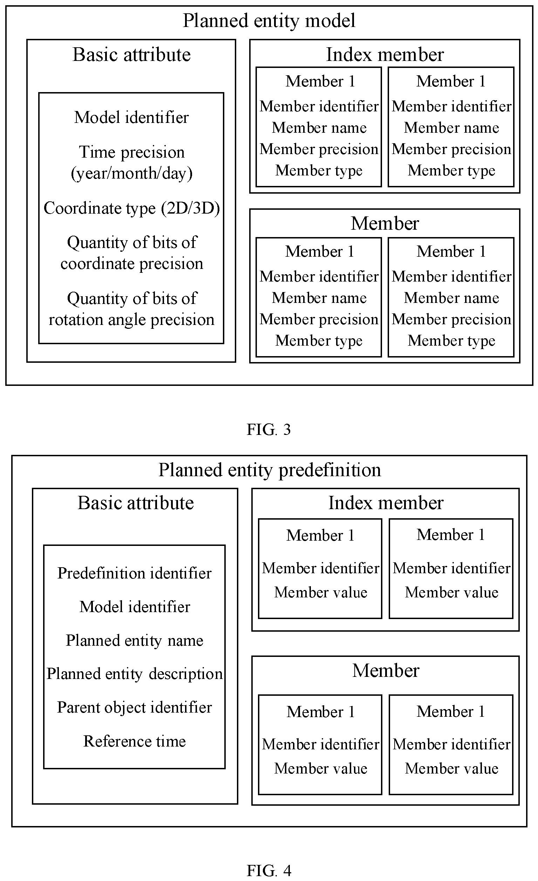

As shown in FIG. 3, basic attributes in the attribute parameter set of the planned entity model may include but are not limited to: a model identifier, time precision (year/month/day), a coordinate type (2D/3D), a quantity of bits of coordinate precision, and a quantity of bits of rotation angle precision. The model identifier is used for determining uniqueness of the model; the time precision describes the time attribute of the model; the coordinate type, the quantity of bits of coordinate precision, and the quantity of bits of rotation angle precision describe the spatial attribute of the model. In addition to the basic attributes listed above, other basic attributes may be defined according to the user's requirements, which are not limited here.

The plurality of attribute parameters included in a planned entity model can be understood as members. Each member has a member identifier (member ID) and a member name. For floating-point type data, member precision can also be configured. The members in the model are divided into two types: index members and common members. An index attribute is established for a corresponding member, at least one index condition is configured for the index attribute, and the index attribute parameter is queried according to the at least one index condition.

### 2) Predefinition (optional) of a planned entity model is as follows.

After constructing the planned entity model, the planned entity model can be predefined. Predefinition is to determine an initial value configuration of each attribute parameter in the target planned entity model and the sub-planned entity model, as shown in FIG. 4, including three parts: basic attributes, index members and members. The basic attributes include: a predefinition identifier, a model identifier, a planned entity name, a planned entity description, a parent object identifier and a reference time. Predefinition of the planned entity has a model identifier for indicating which model is used to generate this predefinition. By predefining the planned entity name and the planned entity description, the planned entity generated by the planned entity can be determined. In this embodiment, planned entities are established in a tree structure, so each predefinition records a parent object identifier thereof. When the parent object identifier is 0, a root object is indicated. When the planned entity is a child planned entity, the reference time is the time of a corresponding parent object thereof. The role of setting the index member is as described above. Types of the basic attributes can be configured according to the user's requirements. In the predefined members, only the member ID and member value need to be stored.

### 3) Generation of a planned entity is as follows.

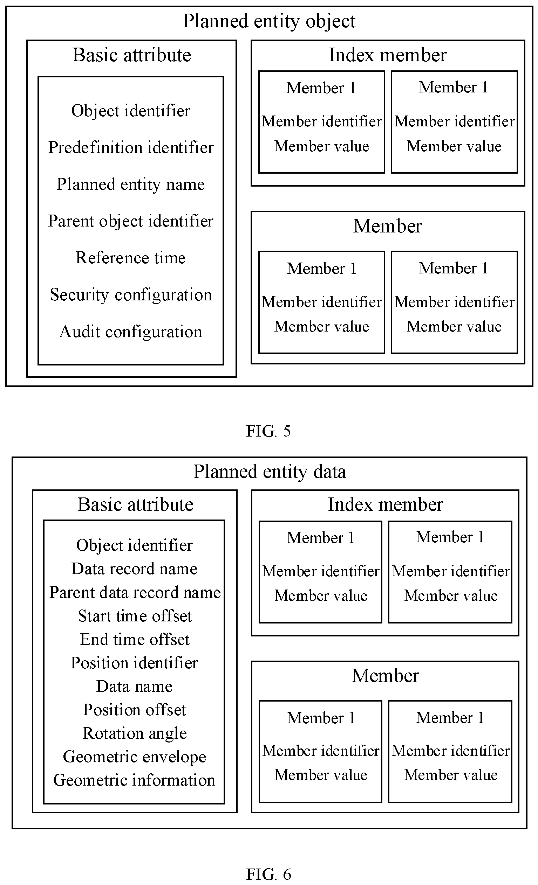

A planned entity is a specific planned entity. For a specific planned entity and a constructed planned entity model, a specific planned entity can be twinned by defining a planned entity name and a planned entity description in the planned entity model. In this embodiment, a target planned entity (also referred to as a parent planned entity in this embodiment) and a child planned entity with a parent-child binding relationship can be twinned, as shown in FIG. 5. The planned entity includes basic attributes, index members and members. Using predefinition of each planned entity model as a basic template, object information is constructed for each planned entity to describe the basic attributes. There is a parent-child hierarchy between planned entities. In the process of constructing the planned entity model, a tree structure of the planned entity model and the predefinition of the planned entities are established according to the spatial relationship in the real world. A tree structure of the planned entities is established according to a spatial relationship between the planned entity model and the predefinition of the planned entity. Object name is given by the user when creating the object and is used by the user to identify the planned entity. The basic attributes include: an object identifier, a predefinition identifier, a planned entity name, a planned entity description, a parent object identifier and a reference time, a security configuration and an audit configuration.

The object identifier is generated by the system when creating the object identifier and is returned to the user to uniquely identify a planned entity. The planned entity is a specific entity that is created by predefinition of planned entities, so a predefinition identifier needs to be recorded in the planned entity. When the planned entity is a child planned entity, corresponding parent object information needs to be added, such as a parent object identifier and reference time. The parent object identifier is used for identifying the parent object of the planned entity. When the parent object identifier is 0, a root object is indicated. The planned entity has "time reference" information PlanTime: PlanTime used for describing a reference time of a root object. With this reference time, a timestamp of data can be set to a difference with the reference time. For example, when the reference time is 2021-1-1 00:00:00, then the time of 2021-1-5 00:00:00 can be expressed as 4 days. The time reference of the child planned entity is 0.

Some common configurations of object data corresponding to the object may be stored in the planned entity, such as security configuration, audit configuration, etc. The security configuration is used for recording operation permissions corresponding to different attribute parameter values in the target planned entity model or the sub-planned entity model. The audit configuration is used for recording attribute parameter value operations in the target planned entity model or the sub-planned entity model that need to be audited.

The planned entity has "time precision" information. The time precision refers to the time precision for describing entity data, and can be divided into a plurality of levels such as year, month, quarter, week, day, hour, minute, second, millisecond, etc. For example, when the time precision is set to day, the time period from 2021-1-1 00:00:00 to 2021-1-5 00:00:00 can be expressed as 1 to 5 days, as shown in Table 1:

**Table 1**

| Object name | Object identifier | Parent object identifier | Time precision | Time reference |
|---|---|---|---|---|
| Factory 1 | 1001 | 0 | Month | 2021-1-1 00:00:00 |
| Workshop 1 | 2001 | 1001 | Day | 0 |
| Workshop 2 | 2001 | 1001 | Day | 0 |

### 4) Generation of a planned entity record is as follows.

According to the attribute parameter values of the planned entity at different times in the future, the planned entity record, i.e., the planned entity data, can be obtained. As an optional implementation, a corresponding target planned entity record (i.e., a first record) is generated using attribute parameters of the target planned entity at different times in the future based on the target planned entity model corresponding to the times in this embodiment. A corresponding sub-planned entity record (i.e., a second record) is generated using attribute parameters of the sub-entity at different times in the future based on the sub-planned entity model corresponding to the times. The attribute parameters include at least one of a first spatial attribute or a member attribute. The attribute parameters may further include other attribute parameters such as an attribute name, a data type, etc. Those skilled in the art may flexibly adjust and set the attribute parameters according to actual production requirements of the factory.

As an optional implementation, the target planned entity record is used as a root storage node, and the sub-planned entity record is used as a child storage node of the root storage node to establish a tree storage structure. The start time of the time attribute of the root storage node is determined as a preset reference time, and the start time of the time attribute of the child storage node is determined as a relative offset time of the preset reference time.

FIG. 6 is a schematic diagram of planned entity data. The planned entity data includes state values of a planned object in different time periods. Each piece of planned entity data has a unique data identifier and data name. The data is also associated with a parent data identifier for indicating an association relationship of the planned data. The parent data identifier of the planned data of the root object is 0. The planned entity data includes a start time offset and an end time offset. The start time offset and the end time offset are offsets relative to the start time of the parent planned data. When the planned entity is a root object, the start time offset and end time offset are offsets relative to the reference time of the planned object.

The planned entity data includes following attributes.

The object identifier indicates which planned entity the record belongs to.

The data record name is used for identifying different records of a planned entity, and is entered by a user. The record name of each planned entity cannot be repeated.

The parent data record name indicates which parent planned entity record the current planned entity record is bound to. When the object corresponding to the planned entity record has no parent object, there is no need to give a parent data record name.

The start/end time offset is expressed using relative time relative to the parent planned entity record. When the object corresponding to the planned entity record has no parent object (that is, the root object), the start time offset of the planned entity record is expressed relative to the time reference. For example, when the time reference is 2021-1-1 00:00:00, the time precision is day, and the start time offset is 6, an offset of 6 days is indicated, and the actual corresponding time is 2021-1-7 00:00:00. Similarly, the end time offset method is similar to the start time offset method, which is not repeated here.

The duration is expressed using the time precision of the corresponding object. For example, when the precision is day, a duration of 6 means it lasts for 6 days. The details are shown in Table 2:

**Table 2**

| Object identifier | Record name | Parent record name | Start time offset | Duration | Others |
|---|---|---|---|---|---|
| 1001 | Factory 1_1 | | 1 | 3 | ... |
| 2001 | Workshop 1_1 | Factory 1_1 | 1 | 1 | ... |
| 2002 | Workshop 2_1 | Factory 1_1 | 1 | 2 | ... |

In addition to the basic attributes mentioned above, basic attributes such as a position identifier, a data name, a position offset, a rotation angle, a geometric envelope and geometric information can be also added.

In this embodiment, one way to trigger the generation of a planned entity record may be to generate a parent record of the target planned entity model and a child record of the at least one sub-planned entity model within at least one duration in the future through the target planned entity model and at least one sub-planned entity model. The parent record and the child record are respectively used for describing an attribute state of the target planned entity and an attribute state of the at least one sub-planned entity within at least one duration in the future. The time range of the at least one child record is within the time range of the parent record. The parent record and the at least one child record include a record identifier for uniquely identifying the parent record or the at least one child record. In addition, the parent record and the at least one child record include a second spatial attribute, and the second spatial attribute includes at least one of a spatial range, a spatial size, a spatial shape, or a spatial position.

### 1) The second spatial attribute is the spatial range.

The parent record and the at least one child record are used for describing change information of the spatial range of the target planned entity and change information of the spatial range of the at least one sub-entity in the at least one duration in the future. In the least one duration in the future, the spatial range of the at least one child record is included within the spatial range of the parent record.

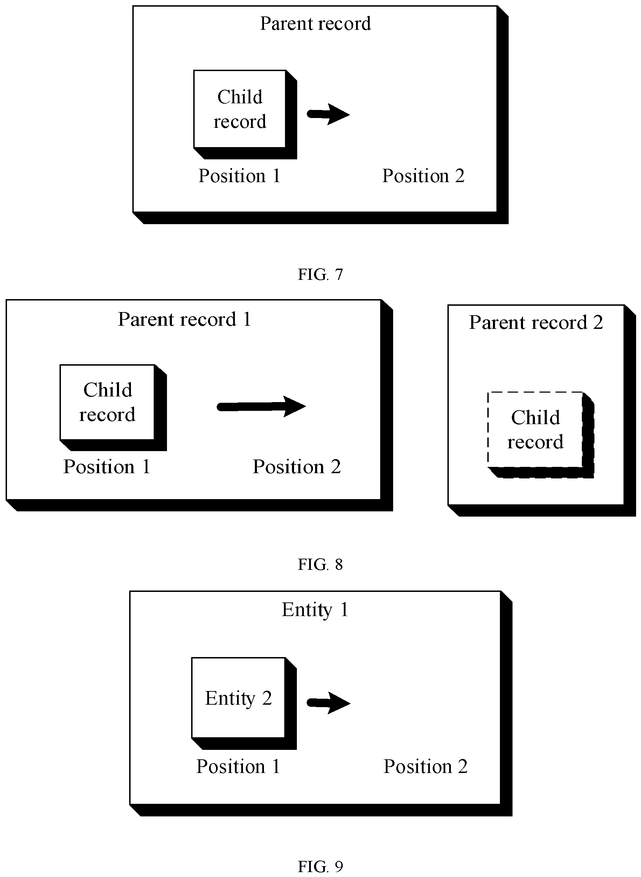

As shown in FIG. 7, at some time in the future, the child record is bound to the parent record, and the spatial range in the spatial attribute of the child record is included in the spatial range of the parent record. When generating a child record corresponding to the future time, the value of the spatial range can be the identifier of the parent record, and the child record can only be bound to a unique parent record. The parent record can further include other child records X, and child records can be moved arbitrarily within the bound spatial range of the child record. When the parent record moves, the child record within the spatial range of the parent record may also move with the parent record, but a position of the child record relative to the parent record may not change.

### 2) The second spatial attribute is the spatial size.

The parent record and the at least one child record are used for describing change information of the spatial size of the target planned entity and change information of the spatial size of the at least one sub-entity in at least one duration in the future. In the at least one duration in the future, the spatial size of the at least one child record is smaller than the spatial size of the parent record. In the future, the spatial size of the parent record and the spatial size of the child record may change, but the spatial size of the child record needs to be smaller than the spatial size of the parent record corresponding to the child record.

### 3) The second spatial attribute is the spatial position.

The parent record and the at least one child record are used for describing change information of spatial position movement of the target planned entity and change information of spatial position movement of the at least one sub-entity in the at least one duration in the future.

In the at least one duration in the future, the spatial position of the at least one child record is included within the spatial position of the parent record.

As an optional implementation, when the spatial position of the same child record changes from the parent record to which the child record belongs to another parent record at different future times, the spatial position of the sub-planned entity model corresponding to the child record is modified at the future time after the spatial position changes.

Each of the parent record and the at least one child record has a coordinate system and a spatial position. Spatial positions of the parent record and the at least one child record are coordinate offsets in their own spatial coordinate systems. The entity can be rotated in real time at any angle within the coordinate system of the entity, and posture information of the entity can be set. In FIG. 7, the spatial coordinate system of the child record is relative to the identifier of the parent record. The type and units of the spatial coordinate system of the child record are independent of the parent record.

In this embodiment, the position attribute value of the child record can be other child records within the spatial range of the parent record. At a certain moment in the future, the position attribute of the child record is a position 1, and the value of the position attribute of the child record corresponding to that moment is an identifier of the position 1. At another moment in the future, the position attribute of the child record is a position 2, that is, the child record moves from the position 1 to the position 2. The position attribute value of the child record corresponding to that moment is modified from the identifier of the position 1 to an identifier of the position 2, and the future time is modified. Taking FIG. 8 as an example, when the child record moves from a parent record 1 to a parent record 2 at a certain moment in the future, the ownership of the spatial position of the child record changes from the parent record 1 to the parent record 2, and then the future time after the spatial position change is modified.

### 4) The second spatial attribute is shape.

At different times in the future, when coordinates of the same parent record in the spatial coordinate system change, the shape attribute of the target planned entity model corresponding to the parent record is modified at the future time after the coordinates change, and the shape attribute of the sub-planned entity model remains unchanged.

The parent record and the at least one child record are used for describing shape change information of the target planned entity and shape change information of the at least one sub-entity in the at least one duration in the future.

In the at least one duration in the future, the shape of the at least one child record is included within the shape of the parent record.

In a possible implementation, when the target planned entity model of at least one sub-planned entity model meets a deletion condition at different times in the future, the method further includes: releasing the parent-child relationship between the at least one sub-planned entity model and the target planned entity model at a future time after meeting the deletion condition. The meeting the deletion condition includes a range of the spatial position of the sub-planned entity model changes to outside a range of the spatial position of the target planned entity model. Taking FIG. 9 as an example, at some moment in the future, entity 2 is included in entity 1. At another point in the future, after entity 1 is deleted, the spatial attribute of entity 2 is modified, and the binding relationship between entity 2 and entity 1 is released.

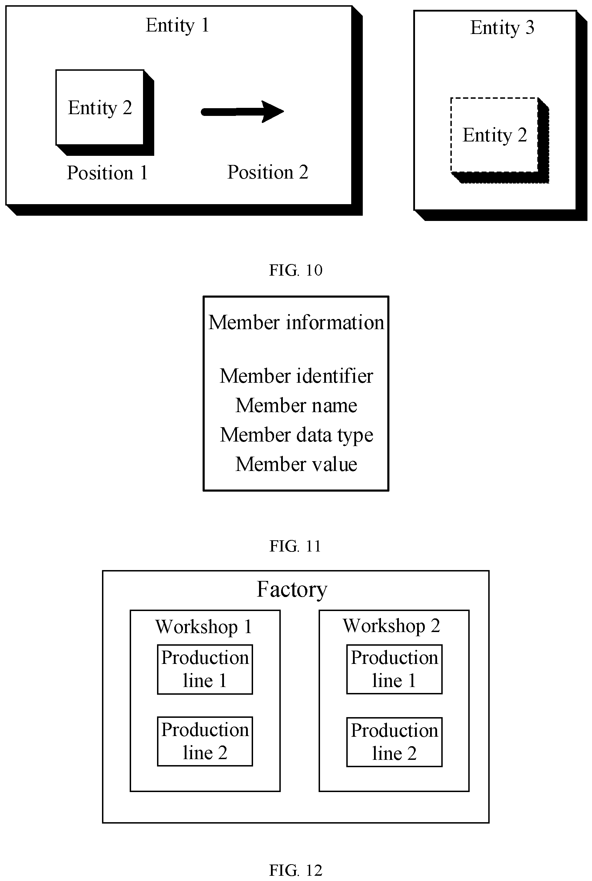

In a possible implementation, at a future time after the deletion condition is met, after only the parent-child relationship between the at least one sub-planned entity model and the target planned entity model is released, there may be two situations. One situation is that the object corresponding to the sub-planned entity model is changed to a root object, and the other situation is that the object corresponding to the sub-planned entity model is bound to a new planned entity object. As shown in FIG. 10, an entity 2 is bound to an entity 3. For the first situation, the first spatial attribute of the at least one sub-planned entity model is modified to a physical space description of the sub-entity corresponding to the at least one sub-planned entity model. For the second situation, the attribute value of the spatial range of the sub-planned entity record can be modified in the future after the deletion condition is met to an identifier of an entity newly bound to. As shown in FIG. 10, the spatial range of the entity 2 is modified from an identifier of the entity 1 to an identifier of an entity 3.

Different attributes of different planned entities can be represented by members, and types and quantities of members can be different. As shown in FIG. 11, member information includes: a member identifier, a member name, a member data type, and a member value.

The present application provides a method for digital twinning of a planned state of an entity. In terms of spatial relationships, a planned entity can exist independently or contain a child object. A child planned entity can only be bound to a unique (parent) object, and the entity itself can be used as a space. In terms of temporal relationships, future time is expressed using relative time, and different entities are expressed at different times in the future through the relative relationship of time. When reference time of the root changes, there is no need to adjust the time of the future state.

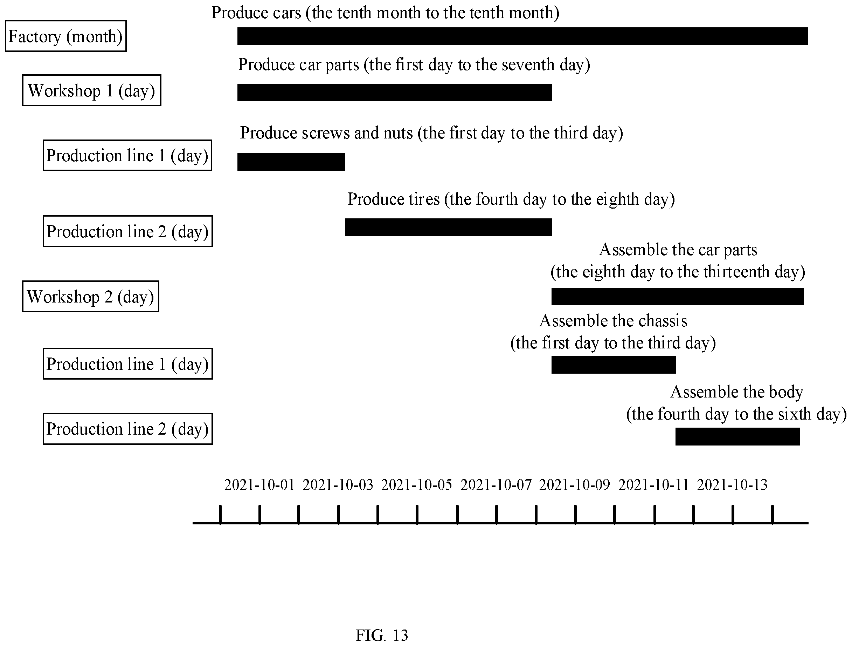

After constructing the spatial parent-child relationship, data can be added based on the service. Power supply time is taken as an example. Suppose a factory needs to produce a car, and the factory needs to start power supply work, so a power supply plan needs to be made according to the production process. As shown in FIG. 12, the factory includes a workshop 1 and a workshop 2. The workshop 1 includes a production line 1 and a production line 2. The workshop 2 includes a production line 1 and a production line 2. In FIG. 13, the work of each workshop and production line has a causal relationship. Power is only supplied when production is in progress, otherwise the power is cut off. In this case, suppose the time required for the factory to produce cars is "2021-10-01" to "2021-10-13", then the factory needs to be powered during this period.

Embodiments of the present application pre-construct a planned entity model of a factory, production lines, workshops and tires, perform predefinition, then determine twinned planned entities, such as a factory, a workshop 1, a workshop 2, a production line 1, a production line 2, a car, a tire, etc., determine planned entities in a tree structure based on a parent-child relationship between entities, and then add data according to following rules to generate planned entity records in a tree structure: each piece of data is marked with a unique name or identifier, and a name or identifier of parent object data needs to be selected for child object data. For example, the parent object of producing a tire is producing a car, then it is necessary to specify which car the tire is produced for. The workshop 1 needs to produce car parts first (the first day to the seventh day), so the workshop 1 needs to start power production first. The workshop 2 needs to wait until the workshop 1 has completed production before the workshop 2 can start assembling the car parts (the eighth day to the thirteenth day). There are also corresponding sequence relationships between similar production lines. For example, now the workshop 1 completes production of the production line 1 before starting production of the production line 2, i.e., the workshop 1 produces screws and nuts first (the first day to the third day) and then produces tires (the fourth day to the eighth day). After the production of the workshop 1 is completed, the production of the production line 1 of the workshop 2 is completed before starting production of the production line 2 of the workshop 2, i.e., the workshop 2 assembles the chassis first (the first day to the third day) and then assembles the body (the fourth day to the sixth day).

This embodiment first establishes a production plan based on this demand, but there may be many accidental changes in the actual production process. For example, when there is a device failure in the workshop 1 that causes production delay, the production of the workshop 2 and the production line of the workshop 2 will need to be postponed. In order to speed up the modification process, relative time is used when organizing data. For example, taking the factory as the reference time, the workshop 1 and the workshop 2 both use relative times. Taking the workshop 1 as the reference time, the corresponding production lines 1 and 2 both use relative times. Taking the workshop 2 as the reference time, the corresponding production lines 1 and 2 both use relative times.

Relative time rules are as follows.

Each object has time precision mainly including progress levels such as year, month, day, hour, minute, and second. When production is calculated daily, then the time precision is day. When some production is faster, then the time precision is hour.

The root object has a reference time. For example, the factory has a reference time of "2021-10-01", then the factory starting to produce cars on "2021-10-01" can be expressed as the production of cars in the tenth month. This can reduce the size of time information stored in the database. The reference time can also be modified. After the modification, the actual production time of the factory may be automatically updated according to the relative time without having to update every production planned time of the factory.

The time of the child object data is relative to the parent object data. For example, the actual time range of the workshop 1 producing the car parts is from 2021-10-01 to 2021-10-07, and can be expressed as the first day to the seventh day. The advantage is that when the factory adjusts the planned time for producing cars due to other reasons, there is no need to adjust following adjustment data.

Different data of the same object cannot have overlapping time ranges, so that resource conflicts can be quickly identified when making production plans.

Each data can have its own geometric shape. The geometric coordinates of the root object data (parent object data) are relative to the coordinate origin, and the geometric coordinates of the child object data are relative to the coordinate position of the parent data. The coordinate range of the child object data cannot exceed the coordinate range of the parent object data. This can prevent exceeding the range that the device can reach when planning production that allows for position allocation.

Based on the same inventive concept, an embodiment of the present application provides a subscribing method for a future state of an entity, as shown in FIG. 4, the method includes following steps.

S1401: Constructing a target planned entity model of a target planned entity and a sub-planned entity model of at least one sub-entity constituting the target planned entity, where each of the target planned entity model and the at least one sub-planned entity model includes a time attribute.

S1402: Setting the time attribute of each of the target planned entity model and the at least one sub-planned entity model to be a future time.

S1403: Establishing an association relationship between the target planned entity model and the at least one sub-planned entity model.

Implementations of S1401-S1403 can be found in the above description and will not be repeated here.

S1404: Generating a subscription item according to a subscription request for a future state of the target planned entity, and generating subscription information matching the subscription item according to future states of the target planned entity model and at least one sub-planned entity model associated with the target planned entity model, and sending the subscription information to a subscriber.

The target planned entity model includes a parent object identifier for uniquely mapping the target planned entity model of the target planned entity.

The at least one sub-planned entity model includes a child object identifier for uniquely mapping the sub-planned entity model of the sub-entity.

The subscription method can perform subscription of a planned entity based on inclusion of an object identifier, a spatial attribute, a spatial range and a type attribute.

In a possible implementation, the generating the subscription item according to the subscription request for the future state of the target planned entity, and generating the subscription information matching the subscription item according to the future states of the target planned entity model and at least one sub-planned entity model associated with the target planned entity model, includes: receiving a subscription request for a future state of a planned entity, the subscription request including a parent object identifier and a child object identifier, and generating a subscription item according to the subscription request; for a target planned entity model, generating subscription information for querying a future state of each sub-planned entity model associated with the target planned entity model according to the parent object identifier of the target planned entity model; for a sub-planned entity model, generating subscription information for querying a future state of the target planned entity model associated with the sub-planned entity model according to the child object identifier of the sub-planned entity model.

During implementation, the subscription item may include the object identifier of the parent planned entity. The subscription item including the object identifier and a filtering condition is generated, and may further include an entity type. Future states of all sub-planned entity models whose parent object identifiers are consistent with the object identifier in the subscription item are queried according to the subscription item, to obtain subscription information matching the subscription item. When there is a filtering condition field in the subscription item and the filtering condition field is not empty, whether the object meets the filtering condition is determined. When the filtering condition is met, a corresponding state change event is published. Alternatively, the subscription item may include an object identifier of a sub-entity. All sub-planned entity models whose object identifiers are consistent with the object identifier in the subscription item are queried according to the subscription item, parent object identifiers of all the sub-planned entity models found are determined, and future states of the target planned entity models corresponding to all the parent object identifiers are obtained, to obtain subscription information matching the subscription item. When there is a filtering condition field in the subscription item and the filtering condition field is not empty, whether the object meets the filtering condition is determined. When the filtering condition is met, a corresponding state change event is published.

The generating the subscription item according to the subscription request for the future state of the target planned entity, and generating the subscription information matching the subscription item according to the future states of the target planned entity model and at least one sub-planned entity model associated with the target planned entity model, includes: receiving a subscription request for a future state of a planned entity, the subscription request including a time range, and generating a subscription item including the time range; generating subscription information for querying a future state of each sub-planned entity model associated with the target planned entity model within the time range according to the parent object identifier of the target planned entity model.

During implementation, the subscription item may include the time range. The subscription item including the time range and a filtering condition is generated, and may further include an entity type. The future state of each sub-planned entity model that meets the filtering condition and has the entity type within the time range is queried according to the subscription item, to obtain subscription information matching the subscription item. When there is a filtering condition field in the subscription item and the filtering condition field is not empty, whether the object meets the filtering condition is determined. When the filtering condition is met, a corresponding state change event is published.

In a possible implementation, the method further includes: receiving a query request for a future state of a target planned entity, where the query request includes a spatial range; for a target planned entity model, querying a future state of each sub-planned entity model within a spatial range of the target planned entity model according to the spatial range; for a sub-planned entity model, querying a target planned entity model with a spatial range including a spatial range of the sub-planned entity model and/or another sub-planned entity model included in the spatial range of the target planned entity model according to the spatial range of the sub-planned entity model.

During implementation, the subscription item may include a spatial range identifier. The subscription item including the spatial range identifier and a filtering condition is generated, and may further include an entity type. The future state of each sub-planned entity model that meets the filtering condition and has the entity type within the spatial range is queried according to the subscription item, to obtain subscription information matching the subscription item. When a new included entity object is created or the included entity object is modified or deleted within the spatial range of the target planned entity, all subscription items with spatial range identifiers of the planned entity can be queried. When there is a subscription item, the planned entity with the spatial range identifier corresponding to the subscription item can perceive that a sub-planned entity has been created, modified or deleted. When there is a filtering condition field in the subscription item and the filtering condition field is not empty, whether the object meets the filtering condition is determined. When the filtering condition is met, a corresponding state change event is published. Alternatively, the future state of each target planned entity model that includes the spatial range, meets the filtering condition and has the entity type is queried according to the subscription item, to obtain subscription information matching the subscription item.

As a possible implementation, the subscription item may further include other field subscription items to realize subscription queries for different purposes, such as a subscription item including a geometric range, a spatial relationship and a filtering condition. Among the future states of the target planned entity model and at least one sub-planned entity model associated with the target planned entity model, future states whose geometric specifications and geometric ranges conform to the spatial relationship and meet the filtering condition are queried, to obtain subscription information matching the subscription item.

Alternatively, a planned library receives a subscription request including "a geometric rage, an entity type, a spatial relationship, and a filtering condition."

A subscription request for a future state of a planned entity is received, and the subscription request includes a geometric range, an entity type, a spatial relationship, and a filtering condition. A subscription item including the geometric range, the entity type, the spatial relationship, and the filtering condition is generated.

Among the future states of the target planned entity model and at least one sub-planned entity model associated with the target planned entity model, future states whose geometric specifications and geometric ranges conform to the spatial relationship, have the entity type and meet the filtering condition are queried, to obtain subscription information matching the subscription item.

The above filtering condition includes change of the future state of the sub-planned entity model, and the change includes creation of a new sub-planned entity model, change of the future state of the same sub-planned entity model, and deletion of the sub-planned entity model.

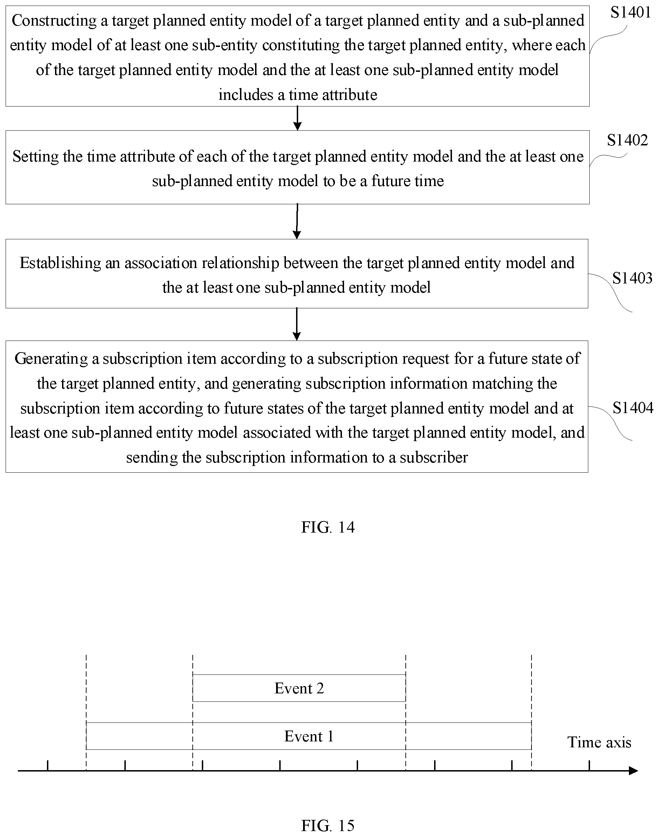

**In** the second aspect, when the object is determined to be an event, the target planned object is a target planned event, and the sub-object is a sub-target planned event. In order to facilitate the distinction from the entity, the event is directly used for description. In the objective world, there are many events that will occur at different times in the future. Relationships between these events are generally intricate and complex. There is a certain sequence of events corresponding to the same entity. Between different entities, a duration of one event may include another event. As shown in FIG. 15, a duration of an event 1 includes an event 2, or an actual start time of an event affects start of another event, etc. In this case, the same data structure can be used to represent the event 1 and the event 2, and the event 1 and the event 2 are respectively marked with unique event identifiers. The event identifier is unique in the entire planned library system and the name can be repeated.

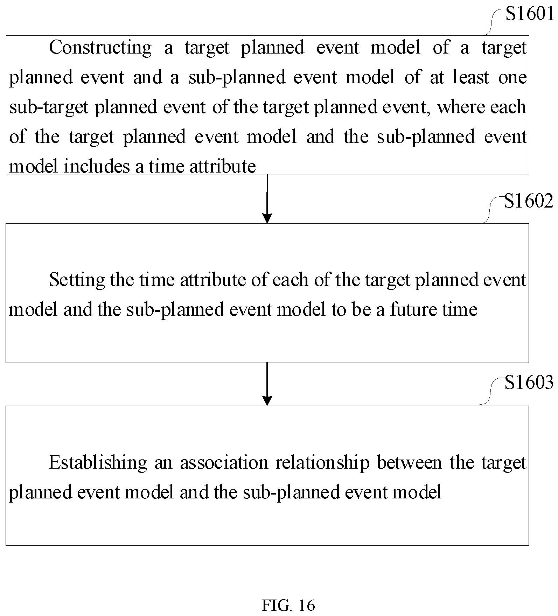

In order to realize the digital twinning of states of an event in different time periods in the future, the present application provides a method for digital twinning of a planned state of an event, as shown in FIG. 16, the method includes following steps.

S1601: Constructing a target planned event model of a target planned event and a sub-planned event model of at least one sub-target planned event of the target planned event, where each of the target planned event model and the sub-planned event model includes a time attribute. A structure of an event model is a set of attribute parameters of an event. The event may include a historical state, a current state, and a planned state according to the time attribute. By performing digital twinning based on the event model and different states of the event, event objects corresponding to different states can be obtained. Embodiments of the present application involve a planned state of an event. For a planned event, digital twinning may be performed based on the event model and the planned state of the event to obtain the planned event object. For ease of description, the following event objects are all replaced by events.

When creating a planned event model, a structure of the planned event model may be obtained by determining an attribute parameter set of the planned event. Attribute parameters in the attribute parameter set of the planned event include an attribute name and a data type.

Furthermore, the structure of the planned event model may be predefined at least once, that is, a parameter initialization operation may be performed to obtain at least one set of predefined data initial values corresponding to the structure of the planned event model. The predefinition steps can be set according to a user's requirements, or predefinition operations may not be performed. In addition, planned event data corresponding to different planned time periods may be determined according to state values of events in different planned time periods.

S1602: Setting the time attribute of each of the target planned event model and the sub-planned event model to be a future time. Attribute parameters of the target planned event model and the sub-planned event model include a time attribute. Since digital twinning is performed for the planned state of the event, the time attribute is set to be a future time.

In a possible implementation, the setting the time attribute of each of the target planned event model and the sub-planned event model to be the future time includes: setting a start time of the target planned event model and the sub-planned event model to at least one moment in the future, and setting a duration; or setting the start time of the target planned event model and the sub-planned event model to at least one moment in the future, and setting an end time of the target planned event model and the sub-planned event model to at least one moment in the future.

The start time refers to an actual start time of the event, that is, the actual time of occurrence. The time attribute of the event model can be set to a future time by setting the start time of the event model to a future time and setting the duration. The time attribute of the event model can also be set to a future time by setting the start time and end time of the event model to a future time.

S1603: Establishing an association relationship between the target planned event model and the sub-planned event model.

In a possible implementation, establishing the association relationship between the target planned event model and the sub-planned event model includes: establishing a parent-child relationship between the target planned event model and the sub-planned event model by identifying the target planned event model as a model of a parent planned event and identifying the sub-planned event model as a model of a child planned event belonging to the parent planned event.

In a possible implementation, the target planned event model and the sub-planned event model include a parent object, and establishing the parent-child relationship between the target planned event model and the sub-planned event model includes: determining the parent object of the sub-planned event model to be an object identifier of the target planned entity model, and establishing the parent-child relationship between the target planned event model and the sub-planned event model.

There may be a plurality of association relationships between events. An association relationship established in an embodiment of the present application is a parent-child relationship, that is, a relationship between a parent planned event and a child planned event. The target planned event model and the child planned event model include a plurality of attribute parameters, and the attribute parameters can be used for identifying whether the planned event model is a model of a parent planned event or a model of a child planned event. After the identification is completed, the parent-child binding relationship between the target planned event model and the sub-planned event model is established.

The parent-child binding relationship of the event model is determined based on the time attribute of the event. The time inclusion relationship is the only constraint of the parent-child binding relationship of the event model. The start time of the parent planned event is earlier than or equal to the start time of the child planned event, and the end time of the parent planned event is later than or equal to the end time of the child planned event, that is, the duration of the child planned event is included in the duration of parent planned event corresponding to the child planned event.

In this embodiment, the parent planned event to which the child planned event belongs is unique, and the identifying the sub-planned event model as the model of the child planned event belonging to the parent planned event includes: identifying the sub-planned event model as the model of the child planned event belonging to a unique parent planned event.

Through the method for digital twinning of a planned state of an event according to the present application, common characteristics can be configured for certain events to achieve twinning of all things, and the digital twinning of the planned state of the event in different time periods in the future can be performed by setting time attributes.

In order to realize the digital twinning of the planned state of the event in embodiments of the present application, several stages including constructing a planned event model, predefining the planned event model (optional), generating a planned event, and generating a planned event record are mainly included. The implementation of each stage is described below.

### 1) A planned event model is constructed.

The planned event model is a configuration of planned events with common characteristics. Some basic attributes of the planned events are defined in the planned event model. This embodiment needs to construct a target planned event model of a target planned event and a sub-planned event model of a sub-planned event. The target planned event can have at least one sub-planned event which has a parent-child binding relationship with the target planned event, and the sub-planned event is bound to a unique target planned event. The sub-planned event occurs within the duration of the target planned event, and the sub-planned event has a service association relationship with the target planned event.

Attribute names in the attribute parameter sets of the target planned event model and the sub-planned event model may be the same, but attribute parameter values may be different.

As an optional implementation, each of the target planned event model and sub-planned event model further includes a spatial attribute. The spatial attribute includes at least one of a spatial range or a spatial position. The spatial range is used for describing a spatial range in which the target planned event and the sub-planned events occur. The spatial position is used for describing that the spatial position in which the sub-planned event model occurs is within a certain range of the spatial position in which the target planned event model occurs, or that the spatial range in which the sub-planned event model occurs is within the spatial range in which the target planned event model occurs. Since the planned event model also has the spatial attribute, the planned event model can also be associated with an entity to represent that the event is generated, formulated, or executed by the entity.

In a possible implementation, an association relationship between a target planned event model and a planned entity, and an association relationship between a sub-planned event model and a planned entity are established.

The target planned event model and the sub-planned event model are associated with the same or different planned entities.

In a possible implementation, the association relationship between the target planned event model and the planned entity, and the association relationship between the sub-planned event model and the planned entity can be established by: setting the spatial attribute of the target planned event model to an identifier of a planned entity associated with the target planned event model; setting the spatial attribute of the sub-planned event model to an identifier of a planned entity associated with the sub-planned event model.

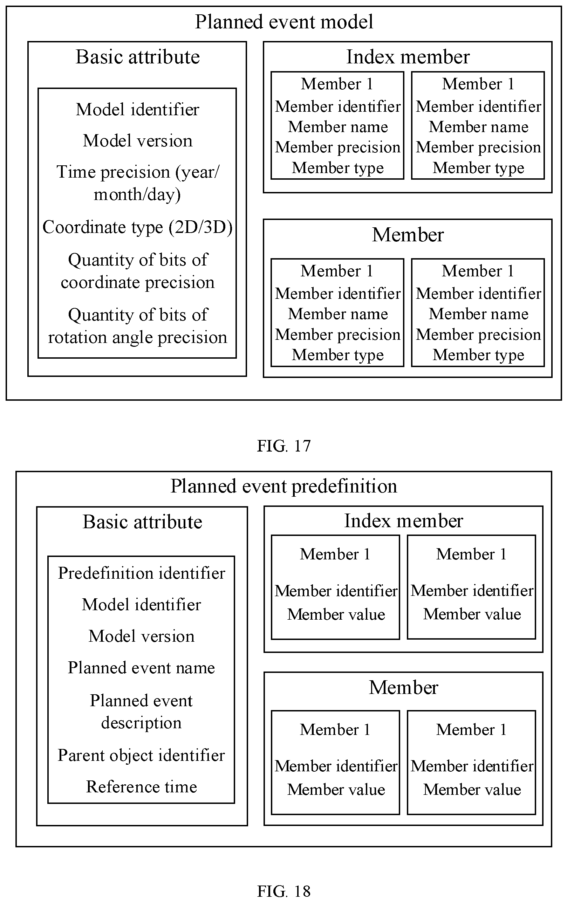

As shown in FIG. 17, basic attributes in the attribute parameter set of the planned event model may include but are not limited to: a model identifier, a model version, time precision (year/month/day), a coordinate type (2D/3D), a quantity of bits of coordinate precision, and a quantity of bits of rotation angle precision.

The model identifier and model version are used for determining uniqueness of the model; the time precision describes the time attribute of the model; the coordinate type, the quantity of bits of coordinate precision, and the quantity of bits of rotation angle precision describe the spatial attribute of the model. In addition to the basic attributes listed above, other basic attributes may be defined according to the user's requirements, which are not limited here.

In a possible implementation, a target planned event model for a target planned event and a sub-planned event model for a sub-target planned event are constructed, including: for the same target planned event, constructing different versions of target planned event models; for the same sub-planned event, constructing different versions of sub-planned event models.

The version identifier is used for identifying the version to which the target planned event model or sub-planned event model belongs. Different versions of the target planned event model or different versions of the sub-planned event model may have change characteristics such as deletion of attribute parameters or addition of attribute parameters or different initial values of the same attribute parameter.

The plurality of attribute parameters included in a planned event model can be understood as members. Each member has a member identifier (member ID) and a member name, and the member precision can also be configured for floating-point type data. The members in the model are divided into two types: index members and members. An index attribute is established for a corresponding member, at least one index condition is configured for the index attribute, and the index attribute parameter is queried according to the at least one index condition. When querying planned event data, filtering and aggregating members based on indexes can be performed more quickly.

### 2) Predefinition (optional) of a planned event model is as follows.

After constructing the planned event model, the planned event model can be predefined. Predefinition is to determine an initial value configuration of each attribute parameter in the target planned event model and the sub-planned event model, as shown in FIG. 18, including three parts: basic attributes, index members and members.

Basic attributes include: a predefined identifier, a model identifier, a model version, a planned event name, a planned event description, a parent object identifier, and a reference time.

Predefinition of the planned event has a model identifier and model version information for indicating which model is used to generate this predefinition. By predefining the planned event name and planned event description, the planned event generated by the planned event can be determined.

In this embodiment, planned events are established in a tree structure, so each predefinition records a parent object identifier thereof. When the parent object identifier is 0, a root object is indicated. When the planned event is a child planned event, the reference time is the time of a corresponding parent object thereof. The role of setting the index member is as described above. Types of the basic attributes can be configured according to user's requirements. In the predefined members, only the member ID and member value need to be stored.

### 3) Generation of a planned event is as follows.

A planned event is a specific planned event. For a specific planned event and a constructed planned event model, a specific planned event can be twinned by defining a planned event name and a planned event description in the planned event model. In this embodiment, a target planned event (also referred to as a parent planned event in this embodiment) and a child planned event with a parent-child binding relationship can be twinned.

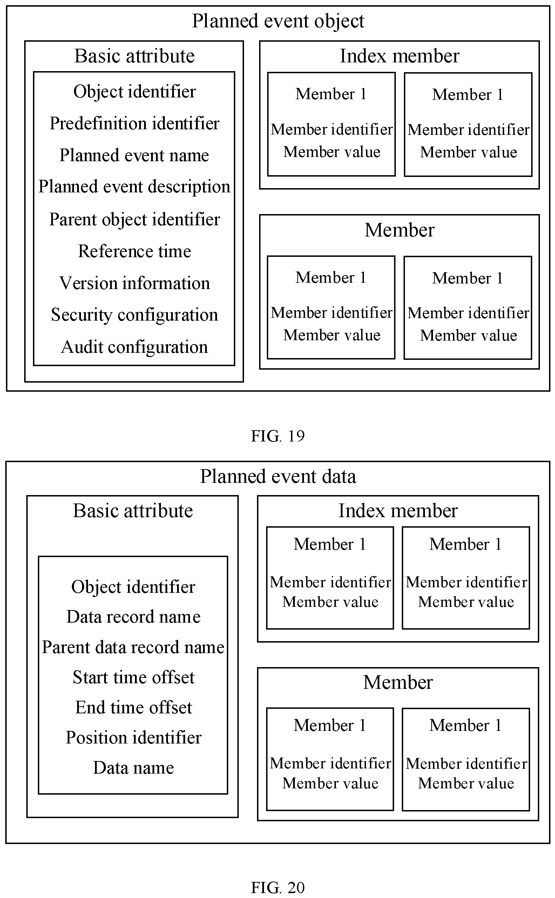

As shown in FIG. 19, the planned event includes basic attributes, index members, and members. Using predefinition of each planned event model as a basic template, object information is constructed for each planned event to describe the basic attributes. There is a parent-child hierarchy between planned events.

In the process of constructing the planned event model, a tree structure of the planned event model and the predefinition of the planned events are established according to a spatial relationship in the real world. A tree structure of the planned events is established according to a spatial relationship between the planned event model and the predefinition of the planned events.

The basic attributes include: an object identifier, a predefinition identifier, a planned event name, a planned event description, a parent object identifier and a reference time, version information, a security configuration and an audit configuration.

The object name is given by a user when creating an object, used by the user to identify a planned event.

The object identifier is generated by the system when creating the object identifier and is returned to the user to uniquely identify a planned event. The planned event is a specific event that is created by predefinition of planned events, so a predefinition identifier needs to be recorded in the planned event. When the planned event is a child planned event, corresponding parent object information needs to be added, such as a parent object identifier and a reference time.

The parent object identifier is used for identifying the parent object of the planned event. When the parent object identifier is 0, a root object is indicated.

The planned event has "time reference" information PlanTime: PlanTime used for describing a reference time of a root object. With this reference time, a timestamp of data can be set to a difference with the reference time. For example, when the reference time is 2021-1-1 00:00:00, then the time of 2021-1-5 00:00:00 can be expressed as 4 days. The time reference of the child planned event is 0.

The time attribute of an event further includes a current time. The current time is the current absolute time of the real-time event. Each time a member of the event is modified, the value of the current time may be modified synchronously to record the latest time of the event change.

Since plans need to be made frequently in the objective world, a plurality of versions of plans can be established through multi-version values of planned events. In actual production, it is possible to quickly decide which version of a plan to adopt. By creating different version information for each planned event, when adding data, which version of data to be added can be specified. The version name is entered by the user and cannot be repeated. The user can query a list of created version information.

Some common configurations of object data corresponding to the object may be stored in the planned event, such as version information, security configuration, audit configuration, etc.

Since a planned state of an event may not change completely as planned, different versions of data are set for the planned state of the planned event in different time periods. The security configuration is used for recording operation permissions corresponding to different attribute parameter values in the target planned event model or the sub-planned event model. The audit configuration is used for recording attribute parameter value operations in the target planned event model or the sub-planned event model that need to be audited.

The planned event has "time precision" information. The time precision refers to the time precision of describing data, and can be divided into a plurality of levels such as year, month, quarter, week, day, hour, minute, second, millisecond, etc. For example, when the time precision is set to day, the time period of 2021-1-1 00:00:00 to 2021-1-5 00:00:00 can be expressed as 1 to 5 days, as shown in Table 3:

**Table 3**

| Object name | Object identifier | Parent object identifier | Time precision | Time reference |
|---|---|---|---|---|
| Event 1 | 1001 | 0 | Month | 2021-1-1 00:00:00 |
| Event 2 | 2001 | 1001 | Day | 0 |
| Event 3 | 2001 | 1001 | Day | 0 |

### 4) Generate of a planned event record is as follows.

According to the attribute parameter values of the planned event at different times in the future, the planned event record, that is, the planned event data, can be obtained.

As an optional implementation, a corresponding target planned event model record (i.e., a first record) is generated using attribute parameters of the target planned event at different times in the future based on the target planned event model corresponding to the times in this embodiment. A corresponding sub-planned event model record (i.e., a second record) is generated using attribute parameters of the sub-planned event at different times in the future based on the sub-planned event model corresponding to the times. The attribute parameters include at least one of an attribute name or a data type. At the same time, the attribute parameters may further include other attribute parameters such as a spatial attribute, a member attribute, etc. Those skilled in the art may flexibly adjust and set the attribute parameters according to actual production requirements of the factory.

The target planned event model record and sub-planned event model record include a record identifier for uniquely identifying the target planned event model record or the sub-planned event model record.

When a user generates an event record, the user needs to specify an event identifier. A planned library finds a corresponding event based on the specified event identifier and obtains member information corresponding to the event. When a member value is not specified when the event record is generated, the member information on the event may be inherited by default. **In** addition, the start time of the event record must also be specified when the event record is generated, and the start time of the event record cannot be earlier than the time of the parent event record.

When the planned event record ends, the planned event record is deleted, a planned library system obtains the current time, subtracts the start time, calculates the duration of the planned event record, and transfers the duration of the planned event record to a historical library system for storage.

For example, when a factory formulates an annual plan, the plan is broken down into each department and becomes a departmental plan. When the enterprise starts to implement the annual plan, the annual plan becomes a real-time parent event. The parent event is created with a start time of 2022-01-01. The annual plan event has two members, one is production and the other is energy consumption. The production is updated once a month and the energy consumption is updated once a day. Each time the energy consumption and the production are updated, only the current time attributes are updated. The associated entity object is "the entire factory".

When a department starts to execute a department plan, the department plan becomes a real-time child event. When a plurality of departments execute plans in parallel and attribute characteristics in the plans are consistent, such as planned production, daily production, number of employees on duty, power consumption, etc., a child event can be created, and a parent event of the child event is identified as a department event. The child event is not set with the start time, and is only set with members of the department event, etc.

After a department A starts to execute a department plan, an event record A is created with a start time of 2022-02-01. The department A plans to complete all planned production on 2022-03-01, at which time the event record ends and is deleted.

When a department B starts to execute a department plan, an event record B is created with a start time of 2022-02-15. The department B plans to complete the planned production on 2022-04-01, at which time the event record ends and is deleted.

As an optional implementation, the target planned event model record is used as a root storage node, and the sub-planned event model record is used as a child storage node of the root storage node to establish a tree storage structure.

The start time of the time attribute of the root storage node is determined as a preset reference time, and the start time of the time attribute of the child storage node is determined as a relative offset time of the preset reference time.

FIG. 20 is a schematic diagram of planned event data. The planned event data includes state values of a planned event in different time periods. Each piece of planned event data has a unique data identifier and data name. The data is also associated with a parent data identifier for indicating an association relationship of the planned data. The parent data identifier of the planned data of the root object is 0. The planned event data includes a start time offset and an end time offset. The start time offset and the end time offset are offsets relative to the start time of the parent planned data. When the planned event is a root object, the start time offset and end time offset are offsets relative to the reference time of the planned event.

The planned event data includes following attributes: the object identifier indicates which planned event the record belongs to; the data record name is used for identifying different records of a planned event, and is entered by a user, and the record name of each planned event cannot be repeated; the parent data record name indicates which parent planned event record the current planned event record is bound to. When the object corresponding to the planned event record has no parent object, there is no need to give a parent data record name. The start time offset is expressed using relative time relative to the parent planned event record. When the object corresponding to the planned event record has no parent object (that is, the root object), the start time offset of the planned event record is expressed relative to the time reference. For example, when the time base is 2021-1-1 00:00:00 and the time precision is day, when the start time offset is 6, an offset of 6 days is indicated, and the actual corresponding time is 2021-1-7 00:00:00. The duration is expressed using the time precision of the corresponding object. For example, when the precision is day, a duration of 6 means it lasts for 6 days. The details are shown in Table 4:

**Table 4**

| Object identifier | Record name | Parent record name | Start time offset | Duration | Others |
|---|---|---|---|---|---|
| 1001 | Event 1_1 | | 1 | 3 | ... |
| 2001 | Event 2_1 | Event 1_1 | 1 | 1 | ... |
| 2002 | Event 2_2 | Event 1_1 | 1 | 2 | ... |

In this embodiment, one way to trigger the generation of a planned event record may be a change in time attributes. When the time attribute of the target planned event changes, a parent object record of the target planned event and a child object record of the child planned event are generated within at least one duration in the future through a target planned event model and at least one child planned event model. The time range of the child object record is within the time range of the parent object record.

As mentioned above, for a target planned event and a sub-planned event, a time range of the target planned event and a time range of the sub-planned event can change. The following is specific information of the planned event record when the time attribute changes.

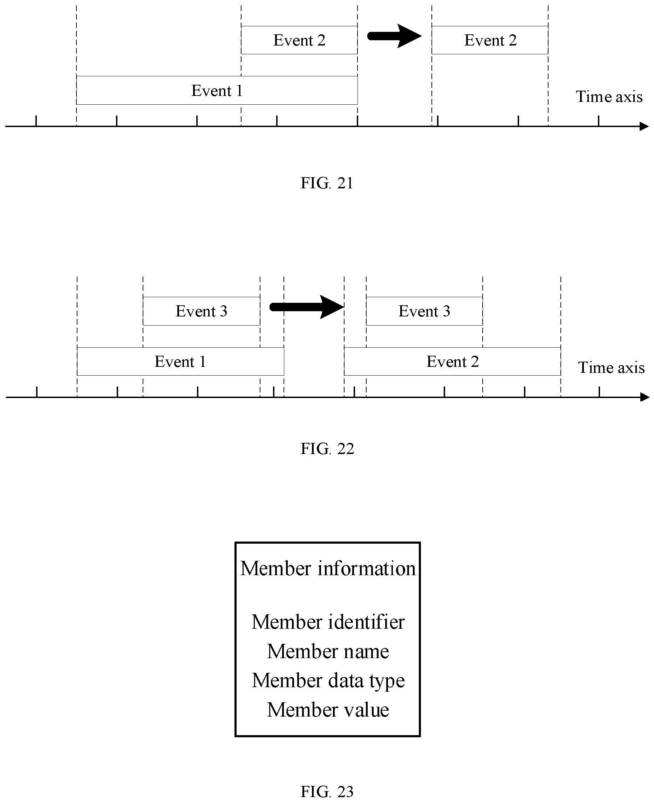

As shown in FIG. 21, at some time in the future, an event 2 is bound to an event 1, and the time range of the event 2 is included in the time range of the event 1. When generating a child planned event record corresponding to the future time, the value of the parent data identifier can be an identifier of the event 1, and the event 2 can only be bound to a unique parent object, that is, the event 1 is the parent object corresponding to the event 2.

The event 1 can also be an included event of another event X. The event 2 can move arbitrarily within the time range of the event 1 to which the event 2 is bound.

When the event 1 moves, the event 2 within the time range of the event 1 may also move with the event 1, but the time offset of the event 2 relative to the event 1 may not change.

In some embodiments, when the target planned event model of the sub-planned event model meets a deletion condition at different times in the future, the present application further includes: releasing the parent-child relationship between the sub-planned event model and the target planned event model at a future time after meeting the deletion condition.

Meeting the deletion condition includes: an end time of the child planned event is later than an end time of the parent planned event, or a duration of the child planned event is longer than a duration of the parent planned event.

In future plans, the time attribute of the same planned event can change. Since the time inclusion relationship of the event is the only constraint of the parent-child binding relationship, when the time attribute of the child planned event changes, the parent planned event corresponding to the child planned event can change accordingly. That is, when the time attribute of the child planned event changes and the duration range of the child planned event is no longer included in the duration range of the original parent planned event of the child planned, the parent-child binding relationship between the child planned event and the original parent planned event is released.

In a possible implementation, at a future time after the deletion condition is met, after the parent-child relationship between the sub-planned event model and the target planned event model is released, there may be two situations. One situation is that the object corresponding to the sub-planned event model is changed to a root object, and the other situation is that the object corresponding to the sub-planned event model is bound to a new planned event object. Taking FIG. 22 as an example, at some moment in the future, a duration range of an event 3 is included in the duration range of the event 1. At another moment in the future, the start time of the event 3 changes, and the duration range of the event 3 is no longer included in the duration range of the event 1, but is included in the duration range of the event 2. In this case, the parent-child binding relationship between the event 3 and the event 1 is released, and a parent-child binding relationship between the event 3 and the event 2 is established.

For the first situation, the parent object identifier of the event corresponding to the sub-planned event model is changed to 0, which means that the event corresponding to the sub-planned event model is the root object.

For the second situation, the parent object identifier of the child planned event record can be modified to an identifier of a newly bound event at a future time after the deletion condition is met. As shown in FIG. 22, the parent object identifier of the event 3 is changed from the identifier of the event 1 to the identifier of the event 2.

Different attributes of different planned events can be represented by members, and types and numbers of members can be different. As shown in FIG. 23, member information includes: a member identifier ID, a member name, a member data type, and a member value. For example, for an alarm event, a person in charge, an alarm threshold, etc. can be represented by a member.

The present application provides a method for digital twinning of a planned state an event. In terms of temporal relationships, a planned event can exist independently or contain a child object. A child planned event can only be bound to a unique (parent) object. Events generated by planned objects organize a parent-child hierarchical relationship of planned events according to the time range inclusion relationship. In space, the planned objects that generate planned events organize the parent-child hierarchical relationship of planned objects according to the space range inclusion relationship. Based on the relationship between planned objects and planned events, the spatial relationship of entities in the objective world and the temporal relationship of events are unified in time and space.

On the basis the unified temporal and spatial relationships between planned objects and planned events, after constructing the parent-child relationship for events, data can be added according to the service. Here, the process of producing cars in a factory is used as an example to illustrate in combination with FIG. 12 and FIG. 13.

In the application of coordinated planned objects, each planned object generates a series of events. As shown in FIG. 12 below, the event that the planned object factory is going to complete is the production of cars, and another planned object workshop is going to complete the event of producing parts and assembling parts. The planned object workshop is further divided into another planned object production line, which is going to complete the event of producing sub-parts.

As shown in FIG. 13, there is a sequence relationship between production events of each workshop and production events of the production line. In this case, assuming that the time required for the factory to produce cars is "2021-10-01" to "2021-10-13", then the factory needs to be in production during this period.

When adding data, following rules are required for organization.
1. Each piece of data is marked with a unique name or identifier.
2. Data of the child event needs to be selected from a data name or identifier of the parent event. For example, the parent event of the planned production of tires is the planned production of cars. These production events need to specify specific products. At this time, the planned event serves the planned entity, and a connection between the planned entity and planned event can be established through the association between the planned entity and planned event.

During the production process, the workshop 1 needs to produce car parts first, and the workshop 2 can only assemble the car parts after the workshop 1 has completed production. There are also corresponding sequence relationships between similar production lines.

Therefore, it is first necessary to establish a production plan (a combination of planned event data) based on demand. The car production event is set with a start time and a time range. A start event record is generated at the start time, and an end event record is generated at the end time. The part production event is also set with a start time and a time range, and each production generates record data.

However, there may be many accidental changes in the actual production process. For example, when there is a device failure in the workshop 1, resulting in production delays, then the production of the workshop 2 and production lines of the workshop 2 may need to be postponed. In order to speed up the modification process, relative time is used when organizing data. Relative time rules are as follows.
1. Each event has time precision mainly including year, month, day, hour, minute, second and other precision levels. When production is calculated daily, then the time precision is day. When the production is faster, then the time precision is hour.
2. The root object has a reference time. For example, the car production event has a reference time of "2021-01-01", then the factory starting to produce cars on "2021-10-01" can be expressed as the production of cars in the tenth month. This can reduce the size of time information stored in the database.
   The reference time can also be modified. After the modification, the actual production time of the factory may be automatically updated according to the relative time, without having to update every production planned time of the factory.
3. The time of the child event data is the relative time to the parent object data. For example, the actual time range of the event of the workshop 1 producing the car parts is from "2021-10-01" to "2021-10-08", and can be expressed as the first day to the eighth day. In this way, when the factory adjusts the planned time for producing cars due to failures, etc., there is no need to adjust data of the child event.
4. Different event data of the same event cannot have overlapping time ranges, so that resource conflicts can be quickly identified when making production plans.

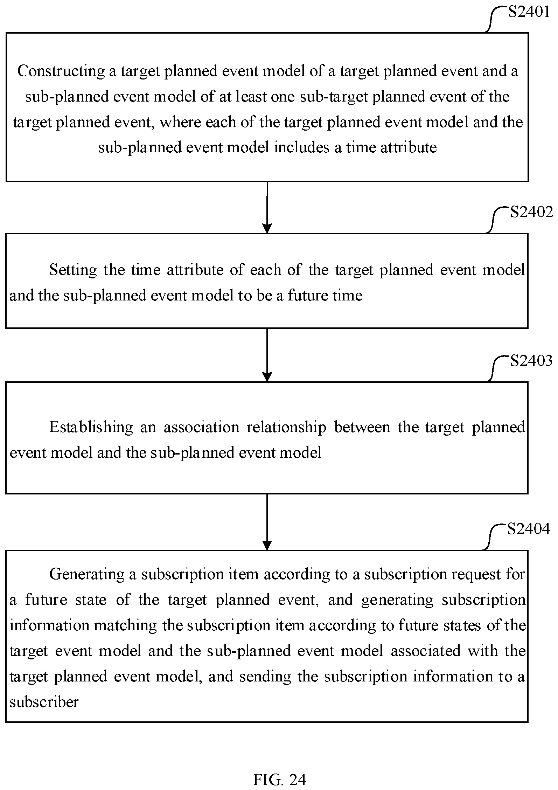

Based on the same inventive concept, an embodiment of the present application provides a subscribing method for a future state of an event, as shown in FIG. 24, the method includes following steps.

S2401: Constructing a target planned event model of a target planned event and a sub-planned event model of at least one sub-target planned event of the target planned event, where each of the target planned event model and the sub-planned event model includes a time attribute.

S2402: Setting the time attribute of each of the target planned event model and the sub-planned event model to be a future time.

S2403: Establishing an association relationship between the target planned event model and the sub-planned event model.

Implementations of S2401-S2403 can be found in the above description and will not be repeated here.

S2404: Generating a subscription item according to a subscription request for a future state of the target planned event, and generating subscription information matching the subscription item according to future states of the target event model and the sub-planned event model associated with the target planned event model, and sending the subscription information to a subscriber.

In a possible implementation, the target planned event model includes a parent object identifier for uniquely mapping the target event model of the target planned event.

The sub-planned entity model includes a child object identifier, which is used to uniquely map the sub-planned entity model to the sub-planned entity.

The subscription method may subscribe to a planned event based on a subscription request containing any information of a parent object identifier, a child object identifier, and a time range.

In a possible implementation, the generating the subscription item according to the subscription request for the future state of the target planned event, and generating the subscription information matching the subscription item according to the future states of the target planned event model and the sub-planned event model associated with the target planned event model, includes: receiving a subscription request for a future state of a planned event, the subscription request including a parent object identifier and a child object identifier, and generating a subscription item according to the subscription request; for a sub-planned event model, generating subscription information for querying a future state of the target event model associated with the sub-planned event model according to the child object identifier of the sub-planned event model.

During implementation, the subscription item may include a parent object identifier. The subscription item including an object identifier and a filtering condition is generated. Future states of all sub-planned event models whose parent object identifier are consistent with the object identifier in the subscription item are queried according to the subscription item, to obtain subscription information matching the subscription item. When there is a filtering condition field in the subscription item and the filtering condition field is not empty, whether the object meets the filtering condition is determined. When the filtering condition is met, a corresponding state change event is published.

Alternatively, the subscription item may include a child object identifier. All sub-planned event models whose object identifier are consistent with the object identifier in the subscription item are queried according to the subscription item, parent object identifiers of sub-planned event models found are determined, and future states of the target planned event models corresponding to all the parent object identifiers are obtained, to obtain subscription information matching the subscription item. When there is a filtering condition field in the subscription item and the filtering condition field is not empty, whether the object meets the filtering condition is determined. When the filtering condition is met, a corresponding state change event is published.

In a possible implementation, the generating the subscription item according to the subscription request for the future state of the target planned event, and generating the subscription information matching the subscription item according to the future states of the target planned event model and the sub-planned event model associated with the target planned event model, includes: receiving a subscription request for a future state of a planned event, the subscription request including a time range, and generating a subscription item including the time range; and generating subscription information for querying a future state of each sub-planned event model associated with the target event model within the time range based on the parent object identifier of the target event model.

During implementation, the subscription item may include the time range. The subscription item including the time range and a filtering condition is generated. The future state of each sub-planned event model associated with the target event model within the time range is queried according to the parent object identifier of the target event model, to obtain subscription information matching the subscription item. When there is a filtering condition field in the subscription item and the filtering condition field is not empty, whether the object meets the filtering condition is determined. When the filtering condition is met, a corresponding state change event is published.

As a possible implementation, the subscription item may further include other field subscription items to implement subscription queries for different purposes.

The following is a detailed description of the subscription method for a future state of an event according to the present application. The subscription method can be roughly divided into the following three categories.
1. Life cycles of all planned event records of a planned event are subscribed.

After receiving a subscription request, a planned library stores subscription item information including an "event identifier". The subscription item information includes the event identifier and a filtering condition. When planned event data (planned event record) for a planned event is created, it is specified for which event the planned event data is created. The planned library internally queries all subscription items corresponding to the event identifier. When the subscription item includes a filtering condition, whether the event record meets the filtering condition is determined. When the filtering condition is met, a subscription event for creating a planned event record is published. When the filtering condition is not met, the subscription event for creating the planned event record is not published.

After the event record is successfully created, the event record is edited, modified or deleted according to the actual situation. The publishing process when the event record is edited, modified or deleted is the same as the publishing process when the event record is added.

During the editing and modification process of the event record, a new version of a planned data record is generated, which is the same as the subscription and publishing process of creating planned data.

2. All events corresponding to a planned entity are subscribed.

After receiving a subscription request, a planned library stores the subscription request as subscription item information. The subscription item information includes a planned entity identifier and a filtering condition.

When a planned event is created, a planned entity associated with the planned event is specified, that is, a planned entity attribute value of the event is set to an identifier of the planned entity. All subscription items of all planned entities whose planned entity identifiers are the planned entity of the event are queried. When the subscription item includes a filtering condition, whether the object meets the filtering condition is determined. When the filtering condition is met, creation of an event record is published. When the filtering condition is not met, creation of the event record is not published.

Creation of the planned event is completed. During the life cycle of the planned event, attributes or member values of the event are deleted and modified. The publishing process during deletion and modification is the same as the publishing process during creation.

During life cycles of all planned event records of the planned event described in the first method, all subscription items of all planned events whose planned entity identifiers are the planned entity corresponding to the event record are queried. When the subscription item includes a filtering condition, whether the object meets the filtering condition is determined. When the filtering condition is met, creation of an event record is published. When the filtering condition is not met, creation of the event record is not published.

3. Changes in twinning states of all child events within a planned event are subscribed, including changes and deletions of child events, and changes in twinning states of child event records generated by child events.

After receiving a subscription request containing only a "parent event identifier and a filtering condition", a planned library stores the subscription request as subscription item information. The subscription item information includes the parent event identifier and the filtering condition.

When a child event changes, all subscription items whose "parent event identifiers" are a parent event identifier of the event are queried. When there is a subscription item, a parent event corresponding to the subscription item can perceive that a child event has been created. When there is a filtering condition field in the subscription item and the filtering condition field is not empty, whether the child event meets the filtering condition is determined. When the filtering condition is met, a child event creation record is published. When the filtering condition is not met, the child event creation record is not published. The publishing process for deleting a child event is the same as the publishing process for modifying the child event.

During life cycles of all sub-planned event records of the described sub-planned event object, all subscription items whose "parent event identifier" is the parent event identifier of the event corresponding to the child event record are queried. When there is a subscription item, the parent event corresponding to the subscription item can perceive creation, deletion or modification of the event record of the child event. When the subscription item includes a filtering condition, whether the object meets the filtering condition is determined. When the filtering condition is met, a subscription event of creating, deleting or modifying an event record is published. When the filtering condition is not met, the subscription event of creating, deleting or modifying the event record is not published.

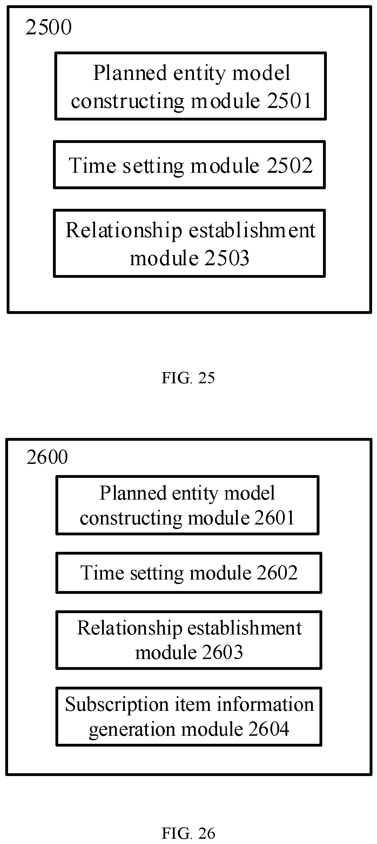

Based on the same inventive concept, an embodiment of the present application provides an apparatus for digital twinning of a planned state of an entity, as shown in FIG. 25, the apparatus 2500 includes: a planned entity model constructing module 2501, configured to construct a target planned entity model and a sub-planned entity model of at least one sub-entity constituting the target planned entity, where each of the target planned entity model and the at least one sub-planned entity model includes a time attribute; a time setting module 2502, configured to set the time attribute of each of the target planned entity model and the at least one sub-planned entity model to be a future time; and a relationship establishment module 2503, configured to establish an association relationship between the target planned entity model and the at least one sub-planned entity model.

Based on the same inventive concept, an embodiment of the present application provides an entity subscription apparatus, as shown in FIG. 26, the apparatus 2600 includes: a planned entity model constructing module 2601, configured to construct a target planned entity model of a target planned entity and a sub-planned entity model of at least one sub-planned entity constituting the target planned entity, where each of the target planned entity model and the at least one sub-planned entity model includes a time attribute; a time setting module 2602, configured to set the time attribute of each of the target planned entity model and the at least one sub-planned entity model to be a future time; a relationship establishment module 2603, configured to establish an association relationship between the target planned entity model and the at least one sub-planned entity model; and a subscription item information generation module 2604, configured to generate a subscription item according to a subscription request for a future state of the target planned entity, and generate subscription information matching the subscription item according to future states of the target planned entity model and at least one sub-planned entity model associated with the target planned entity model.

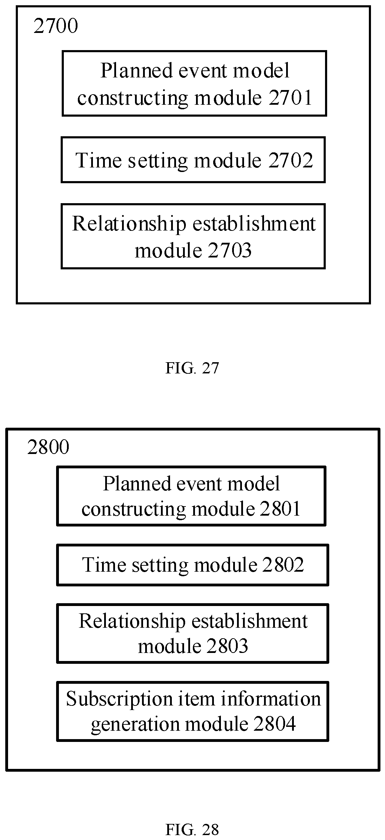

Based on the same inventive concept, the embodiment of the present application provides an apparatus for digital twinning of a planned state of an event, as shown in FIG. 27, the apparatus 2700 includes: a planned event model constructing module 2701, configured to construct a target planned event model of a target planned event and a sub-planned event model of at least one sub-target planned event of the target planned event, where each of the target planned event model and the sub-planned event model includes a time attribute; a time setting module 2702, configured to set the time attribute of each of the target planned event model and the sub-planned event model to be a future time; and a relationship establishment module 2703, configured to establish an association relationship between the target planned event model and the sub-planned event model.

Based on the same inventive concept, an embodiment of the present application provides a subscribing apparatus for a future state of an event, as shown in FIG. 28, the apparatus 2800 includes: a planned event model constructing module 2801, configured to construct a target planned event model of a target planned event and a sub-planned event model of at least one sub-target planned event of the target planned event, where each of the target planned event model and the sub-planned event model includes a time attribute; a time setting module 2802, configured to set the time attribute of each of the target planned event model and the sub-planned event model to be a future time; a relationship establishment module 2803, configured to establish an association relationship between the target planned event model and the sub-planned event model; and a subscription item information generation module 2804, configured to generate a subscription item according to a subscription request for a future state of the target planned event, and generate subscription information matching the subscription item according to future states of the target event model and the sub-planned event model associated with the target planned event model.

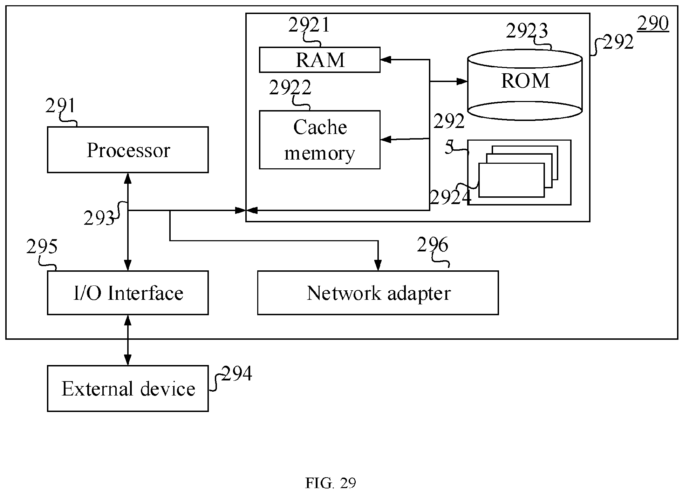

Based on the same inventive concept, an embodiment of the present application provides a device for digital twinning of a planned state of an entity, as shown in FIG. 29, the device includes at least one processor; and a memory communicatively connected to the at least one processor. The memory stores instructions executable by the at least one processor, and the instructions are executed by the at least one processor to cause the at least one processor to perform any method for digital twinning of a planned state of an entity in above embodiments.

An electronic device 290 according to an embodiment of the present application is described below with reference to FIG. 29. The electronic device 290 shown in FIG. 29 is merely an example and should not impose any limitation on functions and scope of use of embodiments of the present application.

As shown in FIG. 29, the electronic device 290 is represented in a form of a general electronic device. Components of the electronic device 290 may include, but are not limited to: at least one processor 291, at least one memory 292, and a bus 293 connecting different system components (including the memory 292 and the processor 291).

Based on the same inventive concept, an embodiment of the present application provides a subscription device or a twinning device. As shown in FIG. 29, the device includes at least one processor; and a memory communicatively connected to the at least one processor. The memory stores instructions executable by the at least one processor, and the instructions are executed by the at least one processor to cause the at least one processor to perform any subscription method in above embodiments or any method for digital twinning of a planned state in above embodiments. The specific implementation method is as mentioned above and will not be repeated here.

In addition, the present application further provides a computer-readable storage medium. The computer storage medium stores a computer program. The computer program is configured to enable a computer to perform any of methods described in above embodiments.

Although embodiments of the present disclosure have been described, those of skill in the art may otherwise make various modifications and variations to these embodiments once they are aware of the basic inventive concept. Therefore, the claims intend to include embodiments as well as all these modifications and variations falling within the scope of the present disclosure. Apparently, those skilled in the art can make various modifications and variations to embodiments of the present disclosure without departing from the spirit and scope of embodiments of the present disclosure. In this way, if the modifications and variations of embodiments of the present disclosure fall within the scope of the claims of the present disclosure and their equivalent technologies, the present disclosure is also intended to include these modifications and variations.

## Claims

1. A method for digital twinning of a planned state of an object, the method comprising:
constructing a target planned object model of a target planned object and a sub-planned object model of at least one sub-object constituting the target planned object, wherein each of the target planned object model and the at least one sub-planned object model comprises a time attribute;
setting the time attribute of each of the target planned object model and the at least one sub-planned object model to be a future time; and
establishing an association relationship between the target planned object model and the at least one sub-planned object model.

2. The method according to claim 1, wherein the target planned object is a target planned entity, and the sub-object is a sub-entity; or,
the target planned object is a target planned event, and the sub-object is a sub-target planned event.

3. The method according to claim 1 or 2, wherein the future time is at least one moment in the future or at least one duration in the future.

4. The method according to claim 1 or 2, wherein the establishing the association relationship between the target planned object model and the at least one sub-planned object model comprises:
establishing a parent-child relationship between the target planned object model and the at least one sub-planned object model by identifying the target planned object model as a model of a parent planned object and identifying the sub-planned object model as a model of a child planned object belonging to the parent planned object.

5. The method according to claim 4, wherein the identifying the sub-planned object model as the model of the child planned object belonging to the parent planned object comprises:
identifying the sub-planned object model as the model of the child planned object belonging to a unique parent planned object.

6. The method according to claim 1 or 2, wherein in response to determining that the target planned object is a target planned entity, each of the target planned object model and the at least one sub-planned object model further comprises a first spatial attribute, and a value of the first spatial attribute of the at least one sub-planned object model is within a range of a value of the first spatial attribute of the target planned object model;
the first spatial attribute comprises at least one of a spatial range, a spatial position, or a shape.

7. The method according to claim 6, wherein the method further comprises:
establishing spatial coordinate systems for the target planned object model and the at least one sub-planned object model respectively;
the spatial range is used for describing a spatial range where the target planned object and the at least one sub-object are located;
the spatial position is represented by an identifier of another planned object where the sub-object is spatially located within the spatial range of the target planned object or a coordinate value of the sub-object in the spatial coordinate system of the target planned object model;
the shape of the target planned object model is represented by coordinates in a spatial coordinate system where the target planned object is located, and the shape of the sub-planned object model is represented by relative coordinates relative to a spatial coordinate system of the target planned entity.

8. The method according to claim 1 or 2, wherein the method further comprises:
in response to determining that the target planned object is a target planned entity, generating a parent record of the target planned object model and a child record of the at least one sub-planned object model in at least one duration in the future through the target planned object model and the at least one sub-planned object model, wherein the parent record and the child record are respectively used for describing attribute states of the target planned object and the at least one sub-object in the at least one duration in the future;
wherein a time range of the at least one child record is within a time range of the parent record.

9. The method according to claim 8, wherein the method further comprises:
establishing an association relationship between the parent record and the at least one child record, wherein the at least one child record has a unique parent record.

10. The method according to claim 9, wherein each of the parent record and the at least one child record comprises a record identifier for uniquely identifying the parent record or the at least one child record.

11. The method according to claim 9, wherein each of the parent record and the at least one child record comprises a second spatial attribute, and the second spatial attribute comprises at least one of a spatial range, a spatial size, a spatial shape or a spatial position.

12. The method according to claim 11, wherein based on that the second spatial attribute is the spatial range, the parent record and the at least one child record are used for describing change information of the spatial range of the target planned object and change information of the spatial range of the at least one sub-object in the at least one duration in the future;
wherein in the at least one duration in the future, the spatial range of the at least one child record is comprised within the spatial range of the parent record.

13. The method according to claim 11, wherein based on that the second spatial attribute is the spatial size, the parent record and the at least one child record are used for describing change information of the spatial size of the target planned object and change information of the spatial size of the at least one sub-object in the at least one duration in the future;
wherein in the at least one duration in the future, the spatial size of the at least one child record is smaller than the spatial size of the parent record.

14. The method according to claim 11, wherein based on that the second spatial attribute is the spatial position, the parent record and the at least one child record are used for describing change information of spatial position movement of the target planned object and change information of spatial position movement of the at least one sub-object in the at least one duration in the future;
wherein in the at least one duration in the future, the spatial position of the at least one child record is comprised within the spatial position of the parent record.

15. The method according to claim 11, wherein based on that the second spatial attribute is the shape, the parent record and the at least one child record are used for describing shape change information of the target planned object and shape change information of the at least one sub-object in the at least one duration in the future;
wherein in the at least one duration in the future, the shape of the at least one child record is comprised within the shape of the parent record.

16. The method according to claim 7, wherein the method further comprises:
based on that the spatial position of the same sub-object changes from one other planned object to which the sub-object belongs to another other planned object at different future times, modifying the spatial position of the sub-planned object model corresponding to the sub-object at the future time after the spatial position changes.

17. The method according to claim 6, wherein based on that the target planned object model of the at least one sub-planned object model meets a deletion condition at different times in the future, the method further comprises:
releasing a parent-child relationship between the at least one sub-planned object model and the target planned object model at a future time after meeting the deletion condition;
wherein the meeting the deletion condition comprises: a range of the spatial position of the sub-planned object model changes to outside a range of the spatial position of the target planned object model.

18. The method according to claim 17, wherein after releasing the parent-child relationship between the at least one sub-planned object model and the target planned object model at the future time after meeting the deletion condition, the method further comprises:
modifying the first spatial attribute of the at least one sub-planned object model to a physical space description where the sub-object corresponding to the at least one sub-planned object model is located.

19. The method according to claim 4, wherein in response to determining that the target planned object is a target planned event, a start time of the parent planned object is earlier than or equal to a start time of the child planned object, and an end time of the parent planned object is later than or equal to an end time of the child planned object.

20. The method according to claim 4, wherein in response to determining that the target planned object is a target planned event, each of the target planned object model and the sub-planned object model comprises a parent object, and the establishing the parent-child relationship between the target planned object model and the sub-planned object model comprises:
establishing the parent-child relationship between the target planned object model and the sub-planned object model by determining the parent object of the sub-planned object model as an object identifier of the target planned object model.

21. The method according to claim 4, wherein in response to determining that the target planned object is a target planned event, based on that the target planned object model of the sub-planned object model meets a deletion condition at different times in the future, the method further comprises:
releasing the parent-child relationship between the sub-planned object model and the target planned object model at a future time after meeting the deletion condition;
wherein the meeting the deletion condition comprises: an end time of the child planned object is later than an end time of the parent planned object, or a duration of the child planned object is longer than a duration of the parent planned object.

22. The method according to claim 21, wherein each of the target planned object model and the sub-planned object model further comprises a spatial attribute;
the spatial attribute comprises at least one of a spatial range or a spatial position.

23. The method according to claim 22, wherein
the spatial range is used for describing a spatial range where the target planned object and the sub-object occur;
the spatial position is used for describing that the spatial position of the sub-planned object model is within a range of the spatial position of the target planned object model or the spatial range of the sub-planned object model is within the spatial range of the target planned object model.

24. The method according to claim 1 or 2, wherein the method further comprises:
generating a corresponding first record using attribute parameters of the target planned object at different times in the future based on the target planned object model corresponding to the times;
generating a corresponding second record using attribute parameters of the sub-object at different times in the future based on the sub-planned object model corresponding to the times;
wherein the attribute parameters comprises at least one of an attribute name, a data type, a first spatial attribute, or a member attribute.

25. The method according to claim 24, wherein each of a record of the target planned object model and a record of the sub-planned object model comprises a record identifier for uniquely identifying the record of the target planned object model or the record of the sub-planned object model.

26. The method according to claim 24, further comprising:
establishing a tree storage structure using the first record as a root storage node and using the second record as a child storage node of the root storage node;
determining a start time of a time attribute of the root storage node as a preset reference time, and determining a start time of a time attribute of the child storage node as a relative offset time of the preset reference time.

27. A subscribing method for a future state of an object, the method comprising:
constructing a target planned object model of a target planned object and a sub-planned object model of at least one sub-object constituting the target planned object, wherein each of the target planned object model and the at least one sub-planned object model comprises a time attribute;
setting the time attribute of each of the target planned object model and the at least one sub-planned object model to be a future time;
establishing an association relationship between the target planned object model and the at least one sub-planned object model; and
generating a subscription item according to a subscription request for a future state of the target planned object, generating subscription information matching the subscription item according to future states of the target planned object model and the at least one sub-planned object model associated with the target planned object model, and sending the subscription information to a subscriber.

28. The method according to claim 27, wherein the target planned object is a target planned entity, and the sub-object is a sub-entity; or,
the target planned object is a target planned event, and the sub-object is a sub-target planned event.

29. The method according to claim 27 or 28, wherein the target planned object model comprises a parent object identifier for uniquely mapping the target planned object model of the target planned object;
the at least one sub-planned object model comprises a child object identifier for uniquely mapping the sub-planned object model of the sub-object.

30. The method according to claim 29, wherein the generating the subscription item according to the subscription request for the future state of the target planned object, and generating the subscription information matching the subscription item according to the future states of the target planned object model and the at least one sub-planned object model associated with the target planned object model, comprises:
receiving a subscription request for a future state of a planned object, the subscription request comprising a parent object identifier and a child object identifier, and generating a subscription item according to the subscription request;
for a target planned object model, generating subscription information for querying a future state of each sub-planned object model associated with the target planned object model according to the parent object identifier of the target planned object model;
for a sub-planned object model, generating subscription information for querying a future state of the target planned object model associated with the sub-planned object model according to the child object identifier of the sub-planned object model.

31. The method according to claim 29, wherein the generating the subscription item according to the subscription request for the future state of the target planned object, and generating the subscription information matching the subscription item according to the future states of the target planned object model and the at least one sub-planned object model associated with the target planned object model, comprises:
receiving a subscription request for a future state of a planned object, the subscription request comprising a time range, and generating a subscription item comprising the time range;
generating subscription information for querying a future state of each sub-planned object model associated with the target planned object model within the time range according to the parent object identifier of the target planned object model.

32. The method according to claim 27 or 28, wherein the method further comprises:
in response to determining that the target planned object is the target planned entity, receiving a query request for a future state of the target planned object, wherein the query request comprises a spatial range;
for a target planned object model, querying a future state of each sub-planned object model within a spatial range of the target planned object model according to the spatial range;
for a sub-planned object model, querying a target planned object model with a spatial range comprising a spatial range of the sub-planned object model and/or another sub-planned object model comprised in the spatial range of the target planned object model according to the spatial range of the sub-planned object model.

33. An apparatus for digital twinning of a planned state of an object, the apparatus comprising:
a planned object model constructing module, configured to construct a target planned object model of a target planned object and a sub-planned object model of at least one sub-object constituting the target planned object, wherein each of the target planned object model and the at least one sub-planned object model comprises a time attribute;
a time setting module, configured to set the time attribute of each of the target planned object model and the at least one sub-planned object model to be a future time; and
a relationship establishment module, configured to establish an association relationship between the target planned object model and the at least one sub-planned object model.

34. A object subscription apparatus, the apparatus comprising:
a planned object model constructing module, configured to construct a target planned object model of a target planned object and a sub-planned object model of at least one sub-object constituting the target planned object, wherein each of the target planned object model and the at least one sub-planned object model comprises a time attribute;
a time setting module, configured to set the time attribute of each of the target planned object model and the at least one sub-planned object model to be a future time;
a relationship establishment module, configured to establish an association relationship between the target planned object model and the at least one sub-planned object model; and
a subscription item information generation module, configured to generate a subscription item according to a subscription request for a future state of the target planned object, and generate subscription information matching the subscription item according to future states of the target planned object model and at least one sub-planned object model associated with the target planned object model.

35. A device for digital twinning of a planned state of an object, the device comprising:
at least one processor; and a memory communicatively connected to the at least one processor; wherein the memory stores instructions executable by the at least one processor, and the instructions are executed by the at least one processor to cause the at least one processor to perform the method according to any one of claims 1 to 26.

36. An object subscription device, the device comprising:
at least one processor; and a memory communicatively connected to the at least one processor; wherein the memory stores instructions executable by the at least one processor, and the instructions are executed by the at least one processor to cause the at least one processor to perform the method according to any one of claims 27 to 32.

37. A computer storage medium, wherein the computer storage medium stores a computer program, and the computer program is configured to enable a computer to perform the method according to any one of claims 1 to 26, or to perform the method according to any one of claims 27 to 32.
